# EUROPEAN PATENT APPLICATION

(11) **EP 4 579 023 A1**
(43) Date of publication of application: **02.07.2025**
(21) Application number: 23872861.2
(22) Date of filing: 12.09.2023
(51) Int. Cl.: D06F 34/05, D06F 34/30, D06F 34/32, D06F 34/34, D06F 29/00, D06F 31/00, D06F 105/58

(54) **APPARATUS FOR TREATING LAUNDRY**

(30) Priority: 27.09.2022 KR 20220122829
(71) Applicant: LG Electronics Inc., Yeongdeungpo-gu Seoul 07336 (KR)
(72) Inventor: SEO, Kyunghye, Seoul 08592 (KR)
(74) Representative: Ter Meer Steinmeister & Partner
(86) International application number: PCT/KR2023/013635
(87) International publication number: WO 2024/071742

(57) **Abstract**

The present disclosure provides an apparatus for treating laundry. An apparatus for treating laundry provided with a plurality of treating courses, according to one embodiment, comprises a user interface (UI) part having a UI provided therein including a screen on which images are outputted and a first input part which receives a user input, wherein the screen may display a first page or a second page, the first page includes a course showing portion that displays a specific treating course specified from among the plurality of treating courses, a plurality of course names corresponding to the plurality of treating courses are outputted onto the second page as a list, and when a user input is received through the first input part, the second page is displayed on the screen.

## Description

### [Technical Field]

The present disclosure relates to a laundry treating apparatus that treats laundry.

### [Background]

A laundry treating apparatus is an apparatus that performs treatment required for laundry, such as removing contaminants on the laundry or drying the laundry by putting the laundry such as clothes and bedding into a drum.

The treatment required for the laundry may be achieved via a course including one or more cycles of washing, rinsing, dehydration, drying, and refreshing. The washing cycle is a cycle that removes foreign substances attached to the laundry with water and detergent. The rinsing cycle is a cycle that separates the laundry and the foreign substances from each other with water. The dehydration cycle is a cycle that removes water from the laundry. The drying cycle is a cycle that removes moisture from the laundry. The refreshing cy29cle is a cycle that performs one or more of deodorization, wrinkle removal, and sterilization of the laundry using one or more of air and steam.

When the laundry treating apparatus is designed to remove the contaminants on the laundry, the laundry treating apparatus may perform the cycles of washing, rinsing, dehydration, drying, and the like. The laundry treating apparatus may include a cabinet forming an outer appearance thereof, a tub accommodated inside the cabinet, a drum rotatably mounted inside the tub and into which the laundry is put, and a detergent supply apparatus that supplies the detergent into the drum. When the drum is rotated by a motor while washing water is supplied to the laundry accommodated in the drum, stains on the laundry may be removed by friction between the drum and washing water.

When the laundry treating apparatus is designed to dry the laundry, the laundry treating apparatus may remove the moisture from the laundry by providing dry air to the laundry. The laundry treating apparatus may include a cabinet, a drum rotatably disposed inside the cabinet, a heating means that heats or dries air provided to the laundry, and the like. By supplying dry air to the laundry accommodated in the drum, the moisture present in the laundry may be evaporated and removed by the dry air, and the moisture in the laundry may be removed.

Publication document KR 10-2022-0029635 A1 discloses a laundry treating apparatus equipped with a plurality of treatment devices together. The laundry treating apparatus of the publication document has a first treating apparatus disposed at an upper side and a second treating apparatus disposed at a lower side. A control panel including a manipulation part and a display for controlling the first treating apparatus and the second treating apparatus is provided in a central area of a front surface of the laundry treating apparatus.

Recently, consumers' interest in interior design has been increasing. Such interest is reflected in a trend of furnitureization of home appliances. The home appliances, which were recognized as electronic products, have a need to satisfy a heightened aesthetic sense of the consumers beyond crude design resulted from a presence of multiple manipulation buttons.

### [Summary]

### [Technical Problem]

The present disclosure is to provide a laundry treating apparatus that may implement a simple user interface and may provide an interior design effect when placed in an installation environment.

The present disclosure is to provide a laundry treating apparatus that may implement a simple user interface in providing the user interface on a control panel that may control all of a plurality of treating apparatuses that constitute the laundry treating apparatus, and may provide an interior design effect when placed in an installation environment.

The present disclosure is to provide a simple design that does not have a complicated front surface that is externally visible in providing a user interface of a laundry treating apparatus.

The present disclosure is to provide a laundry treating apparatus that provides an effective treatment course search method depending on a situation and provides a user interface that may change a treatment course when a currently specified treatment course is to be changed to another treatment course.

The present disclosure is to provide a laundry treating apparatus that may display important information appropriate to a situation without increasing complexity of a screen to provide a simple design.

The present disclosure is to provide a laundry treating apparatus in which an image provided on a user interface (UI) during a cycle and/or a course of a laundry treating apparatus may be beautifully absorbed into an installation space.

Problems to be solved by the present disclosure are not limited thereto, and other problems that are not mentioned will be clearly understood by those skilled in the art from a description below.

### [Technical Solutions]

The present disclosure provides a laundry treating apparatus. The laundry treating apparatus provided with a plurality of treatment courses according to an embodiment includes a UI section with a user interface (UI) including a screen where an image is output and a first inputter that receives an input of a user, the screen displays a first page or a second page, the first page includes a course display portion where a specific treatment course specified among the plurality of treatment courses is displayed, the second page outputs a plurality of course names respectively corresponding to the plurality of treatment courses as a list, and the second page is displayed on the screen when the input of the user via the first inputter is received.

In an embodiment, when one of the plurality of course names is selected in the second page, a treatment course of the selected course name may be specified as the specific treatment course.

In an embodiment, the screen may be equipped as a touch screen that receives a touch input of the user, and when an area where one of the plurality of course names is displayed is selected in the second page, a treatment course of the selected course name may be specified as the specific treatment course.

In an embodiment, when the input of the user via the first inputter is received while the specific treatment course is displayed in the first page, among the plurality of course names in the second page, a course name of the specific treatment course may be displayed to be distinguished from remaining course names.

In an embodiment, the course name of the specific treatment course and the remaining course names may be displayed in different colors.

In an embodiment, the second page may display a portion of the list and a remaining portion may be displayed via scrolling of the user, and when the input of the user via the first inputter is received while the specific treatment course is displayed in the first page, a portion of the second page where a course name of the specific treatment course is displayed may be displayed first.

In an embodiment, the screen may be equipped as a touch screen that receives a touch input of the user, and the first inputter may be provided in the first page.

In an embodiment, the first inputter may be provided in an area occupied by the course display portion.

In an embodiment, the first inputter may be provided overlapping an area where the specific treatment course is displayed.

The present disclosure provides a laundry treating apparatus. The laundry treating apparatus provided with a plurality of treatment courses according to an embodiment includes a UI section with a user interface (UI) including a touch screen that outputs an image and receives a touch input of a user, the touch screen outputs a first page, the first page includes a course display portion where a specific treatment course specified among the plurality of treatment courses is displayed, and when a portion of the touch screen where the first page is output is touched and a swipe gesture is input in a certain direction, one of the plurality of treatment courses is specified as the specific treatment course depending on the swipe direction.

In an embodiment, the portion of the touch screen for the swipe to be input may be a portion of the course display portion.

In an embodiment, in a state where a first treatment course among the plurality of treatment courses is specified as the specific treatment course displayed in the course display portion, a second treatment course different from the first treatment course may be specified as the specific treatment course when the swipe direction is a first direction, and a third treatment course different from the first treatment course and the second treatment course may be specified as the specific treatment course when the swipe direction is a second direction different from the first direction.

In an embodiment, each treatment course constituting the plurality of treatment courses may have a set sequence, and when the swipe is input, the one of the plurality of treatment courses may be specified as the specific treatment course depending on the set sequence and the swipe direction.

In an embodiment, a sequence indicator allowing visual recognition of the sequence of the displayed specific treatment course may be displayed on the screen.

In an embodiment, the UI section may include a first inputter, the screen may output the first page or a second page, a plurality of course names respectively corresponding to the plurality of treatment courses may be output as a list in the second page, when the first inputter is selected during the output of the first page, the second page may be output on the touch screen, and when one of the plurality of course names is selected in the second page, a treatment course of the selected course name may be specified as the specific treatment course.

In an embodiment, the course display portion may display a course name of the specific treatment course and a course description that is a description of the specific treatment course.

In an embodiment, a plurality of options may be provided to at least one of the plurality of treatment courses, the first page may further include an option display portion where the plurality of options provided by the specific treatment course are displayed, and the option display portion may be positioned downward of the course display portion.

In an embodiment, respective option names and option values of the plurality of options may be displayed in the option display portion.

In an embodiment, the laundry treating apparatus may further include a first treating apparatus including a first drum constructed to accommodate the laundry therein, and a second treating apparatus disposed on the first treating apparatus and including a second drum constructed to accommodate the laundry therein.

In an embodiment, the first treating apparatus may include a first front panel disposed at a front side, the second treating apparatus may include a second front panel disposed at a front side, a control panel disposed between the first front panel and the second front panel and for controlling at least one of the first treating apparatus and the second treating apparatus may be included, and the UI section may be provided on the control panel.

### [Advantageous Effects]

According to various embodiments of the present disclosure, the simple user interface may be implemented and the interior design effect may be implemented in the installation environment.

According to various embodiments of the present disclosure, the simple user interface may be implemented in providing the user interface on the control panel that may control all of the plurality of treating apparatuses that constitute the laundry treating apparatus, and the interior design effect may be provided in the installation environment.

According to various embodiments of the present disclosure, the simple design that does not have the complicated front surface that is externally visible may be provided in providing the user interface of the laundry treating apparatus.

According to various embodiments of the present disclosure, the effective treatment course search method may be provided depending on the situation and the treatment course may be changed when the currently specified treatment course is to be changed to another treatment course.

According to various embodiments of the present disclosure, the important information appropriate to the situation may be displayed without increasing the complexity of the screen to provide the simple design.

According to various embodiments of the present disclosure, it is to provide the laundry treating apparatus in which the image provided on the user interface (UI) during the cycle and/or the course of the laundry treating apparatus may be beautifully absorbed into the installation space.

Effects of the present disclosure are not limited to the above-described effects, and other effects that are not mentioned will be clearly understood by a person skilled in the art to which the present disclosure pertains from the present document and the attached drawings.

### [Brief Description of the Drawings]

FIG. 1 is a perspective view illustrating a laundry treating apparatus according to an embodiment of the present disclosure.
FIG. 2 is a simple illustration of relationships between a control panel, and a first treating apparatus and a second treating apparatus according to an embodiment of the present disclosure.
FIG. 3 is a front perspective view of a control panel according to an embodiment of the present disclosure.
FIG. 4 is an exploded perspective view of a control panel according to an embodiment of the present disclosure.
FIG. 5 illustrates a UI section according to an embodiment of the present disclosure.
FIG. 6A is a table listing various touch gestures of touching a touch inputter according to an embodiment of the present disclosure.
FIG. 6B is a table that lists flows in which an image displayed on a screen is switched based on a reason for an occurrence.
FIG. 7 illustrates a cycle flow according to an embodiment when a washing machine is provided as a first treating apparatus or a second treating apparatus according to an embodiment of the present disclosure.
FIG. 8 illustrates a cycle flow according to an embodiment when a dryer is provided as a first treating apparatus or a second treating apparatus according to an embodiment of the present disclosure.
FIGS. 9, 10, and 11 illustrate a state in which a first apparatus manipulation UI according to an embodiment of the present disclosure is displayed on a touch screen, and a course selection page according to an embodiment is output.
FIG. 12 illustrates a flow of changing a specific treatment course via a course browser page, in which a first apparatus manipulation UI according to an embodiment of the present disclosure is displayed on a touch screen.
FIG. 13 illustrates a view in which a course browse page of a first apparatus manipulation UI according to an embodiment of the present disclosure is output.
FIG. 14 illustrates a flow of changing a specific treatment course via a swipe input in a course selection page of a first apparatus manipulation UI according to an embodiment of the present disclosure.
In FIG. 15, (a) illustrates embodiments of indicators that may be applied in a first apparatus manipulation UI according to an embodiment of the present disclosure, and (b) illustrates an embodiment of a sequence indicator that may be applied in a first apparatus manipulation UI according to an embodiment of the present disclosure.
FIG. 16 illustrates a flow of changing an option value, in which a first apparatus manipulation UI according to an embodiment of the present disclosure is displayed on a touch screen.
FIG. 17 illustrates a state in which a first apparatus manipulation UI according to an embodiment of the present disclosure is displayed on a touch screen, and a first page according to an embodiment is output.
FIG. 18 illustrates a state in which a first apparatus manipulation UI according to an embodiment of the present disclosure is displayed on a touch screen, a first page according to an embodiment is output, and a reservation option is set.
FIGS. 19 and 20 illustrate a flow of execution, progression, and completion of standard washing as a specific treatment course, in which a first apparatus manipulation UI according to an embodiment of the present disclosure is displayed on a touch screen and a reservation option is set according to an embodiment.
FIG. 21 illustrates a flow when a specific treatment course is changed to another treatment course based on a first method, in which a first apparatus manipulation UI according to an embodiment of the present disclosure is displayed on a touch screen and any of the treatment courses is paused during progression as the specific treatment course according to an embodiment.
FIG. 22 illustrates a flow when a specific treatment course is changed to another treatment course based on a second method, in which a first apparatus manipulation UI according to an embodiment of the present disclosure is displayed on a touch screen and any of treatment courses is paused during progression as a specific treatment course according to an embodiment.
FIG. 23 is an additional function page of a first treating apparatus 10 according to an embodiment of the present disclosure. FIG. 23 illustrates a touch input to enter an 'other settings' item among additional function items.
FIG. 24 illustrates a state in which an other settings page, which collects additional functions with a low usage frequency among additional functions of a first treating apparatus 10 according to an embodiment of the present disclosure, is output.
FIG. 25 illustrates a state in which a common settings page, which is a page that collects additional functions that may be commonly set by a first treating apparatus 10 and a second treating apparatus 20 according to an embodiment of the present disclosure, is output.
FIG. 26 illustrates a flow of setting a reservation option among additional functions according to an embodiment of the present disclosure and a flow of executing a reservation cycle as the reservation option is set.
FIG. 27 illustrates a flow of changing a preset reservation option among additional functions according to an embodiment of the present disclosure and a flow of executing a reservation cycle.
FIG. 28 illustrates a flow of canceling a preset reservation option among additional functions according to an embodiment of the present disclosure and a flow of images displayed on a first apparatus manipulation UI.
FIG. 29 illustrates a flow when a specific treatment course is changed based on a first method in a course selection page in which a reservation option is set among additional functions according to an embodiment of the present disclosure.
FIG. 30 illustrates a flow when a specific treatment course is changed based on a second method in a course selection page in which a reservation option is set among additional functions according to an embodiment of the present disclosure.
FIG. 31 illustrates a flow when a specific treatment course is changed in a first page while a reservation cycle is in progress as a reservation option is set among additional functions according to an embodiment of the present disclosure.
FIG. 32 illustrates a view in which an 'option suggestion' is suggested and a flow in which the 'option suggestion' is accepted and reflected when 'magic shortcut', which is one of additional functions that may be set by additional functions according to an embodiment of the present disclosure, is set, in which a first apparatus manipulation UI according to an embodiment of the present disclosure is displayed on a touch screen.
FIG. 33 illustrates a flow in which, contrary to FIG. 32, acceptance of 'option suggestion' is released and the 'option suggestion' is not applied.
FIG. 34 illustrates a flow of changing a specific treatment course via a course browse page, in which a second apparatus manipulation UI according to an embodiment of the present disclosure is displayed on a touch screen.
FIG. 35 illustrates a state in which a second apparatus manipulation UI according to an embodiment of the present disclosure is displayed on a touch screen and a first page according to an embodiment of the present disclosure is output.
FIG. 36 illustrates a view in which 'option suggestion' is suggested and a flow in which the 'option suggestion' is accepted and reflected when 'magic shortcut', which is one of additional functions that may be set by additional functions according to an embodiment of the present disclosure, is set, in which a second apparatus manipulation UI according to an embodiment of the present disclosure is displayed on a touch screen.
FIG. 37 illustrates a flow in which, contrary to FIG. 36, acceptance of 'option suggestion' is released and the 'option suggestion' is not applied.

### [Best Mode]

Hereinafter, with reference to attached drawings, an embodiment of the present disclosure will be described in detail such that a person having ordinary skill in the art to which the present disclosure belongs may easily practice the same.

However, the present disclosure may be implemented in various different forms and may not be limited to the embodiment described herein. In addition, to clearly illustrate the present disclosure in the drawings, parts that are not related to the description are omitted, and similar parts are assigned similar reference numerals throughout the present document.

In the present document, redundant descriptions of identical components are generally omitted.

### <Definition of terms>

A term "laundry treating apparatus" to be used in the following description means any apparatus capable of treating laundry, such as washing, drying, or refreshing the laundry. A term "treating apparatus" as used herein means any apparatus capable of treating the laundry, such as washing or drying the laundry, but is defined as a subordinate concept of the "laundry treating apparatus". In the embodiment shown and described, the laundry treating apparatus is an apparatus in which a first treating apparatus and a second treating apparatus are provided by being stacked in a vertical direction.

A term "treatment of the laundry" to be used in the following description means treatment, such as washing, sterilization, bleaching, softening, drying, and the like performed on the laundry. The treatment of the laundry may be achieved by a cycle and a course performed by the laundry treating apparatus. One or more cycles are combined with each other to constitute the course. The one or more cycles may be listed in a chronological order and may be combined with each other to constitute the course. The cycle includes a washing cycle, a rinsing cycle, a dehydration cycle, a drying cycle, a cooling cycle, a refreshing cycle, and the like. The washing cycle is a cycle that removes foreign substances attached to the laundry with water and detergent. The rinsing cycle is a cycle that separates the laundry and the foreign substances from each other with water. The dehydration cycle is a cycle that removes water from the laundry. The drying cycle is a cycle that removes moisture from the laundry. The cooling cycle is a cycle that lowers a temperature of the heated laundry. The refresh cycle is a cycle that performs one or more of deodorization, wrinkle removal, and sterilization on the laundry using at least one of air and steam.

A term "detergent" to be used in the following description means any substance used for sterilization, disinfection, or impurity removal of the laundry, fiber, or the like. In an embodiment, the detergent may be a solid in a powder form, a liquid, or the like.

A term "softener" to be used in the following description means any substance or agent used to make the laundry, the fiber, or the like soft and smooth.

A term "bleach" to be used in the following description means any substance or agent that chemically decomposes and removes a colored substance contained in the fiber or the like to make the fiber or the like white.

A term "laundry treatment agent" to be used in the following description means any substance that may cause a chemical or physical action to treat the laundry. In an embodiment, the laundry treatment agent may be used to mean the detergent, the softener, the bleach, and the like.

A term "fluid" to be used in the following description means any fluid that may be mixed with the laundry treatment agent or may act as a solvent for the laundry treatment agent. In an embodiment, the fluid may be washing water, that is, water.

Terms "upper side", "lower side", "left side", "right side", "front side" and "rear side" to be used in the following description will be understood with reference to a coordinate system of the attached drawings.

In the present document, it will be understood that when a component is referred to as being 'connected to' or 'coupled to' another component herein, it may be directly connected to or coupled to the other component, or one or more intervening components may be present. On the other hand, it will be understood that when a component is referred to as being 'directly connected to' or 'directly coupled to' another component herein, there are no other intervening components.

Terms used herein are used only to describe a specific embodiment and are not intended to limit the present disclosure.

Singular expressions used herein include plural expressions unless the context clearly dictates otherwise.

The terms such as "include" or "have" used herein are intended to indicate that features, numbers, steps, operations, elements, components, or combinations thereof described herein exist and it should be thus understood that the possibility of existence or addition of one or more different features, numbers, steps, operations, elements, components, or combinations thereof is not excluded.

In addition, herein, the term 'and/or' includes a combination of a plurality of listed items or any of the plurality of listed items. Herein, 'a or b' may include 'a', 'b', or 'both a and b'.

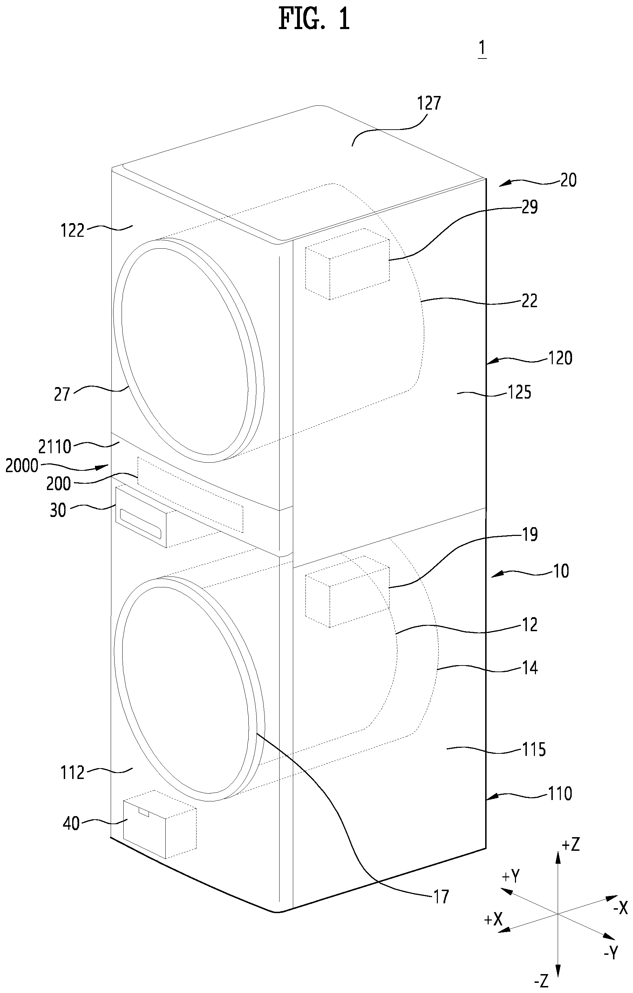

FIG. 1 illustrates a laundry treating apparatus 1 according to an embodiment of the present disclosure. In an embodiment of the present disclosure, the laundry treating apparatus 1 includes a first treating apparatus 10, a second treating apparatus 20, and a control panel 2000.

In the description of the present disclosure, a forward direction (+X), a rearward direction (-X), a first lateral direction (+Y), a second lateral direction (-Y), an upward direction (+Z), and a downward direction (-Z) for respective components may all be defined with the same terms. For example, forward and rearward directions (+X, -X) of the first treating apparatus 10 may be defined in the same manner as forward and rearward directions of the second treating apparatus 20, the control panel 2000, and the like, and the lateral direction (Y) and the upward and downward direction (Z) may also be defined in the same manner.

The first treating apparatus 10 and the second treating apparatus 20 may be various types of apparatuses for treating the laundry, such as a washing machine that washes the laundry and/or a dryer that dries the laundry. The first treating apparatus 10 may be the washing machine and the second treating apparatus 20 may be the dryer. The first treating apparatus 10 and the second treating apparatus 20 may both be the washing machines or the dryers, or the first treating apparatus 10 may be the dryer and the second treating apparatus 20 may be the washing machine, or the apparatuses may be various apparatuses for treating the laundry.

In an embodiment, the first treating apparatus 10 located at a lower side may correspond to the washing machine for washing the laundry. A first drum 12 and a tub 14 that accommodate the laundry therein may be disposed inside the first treating apparatus 10. The first drum 12 inside the first treating apparatus 10 may be disposed to be rotatable inside the tub 14. The first drum 12 in an embodiment has a rotation axis that is placed in the forward/rearward direction (+X, -X).

The first treating apparatus 10 may include a first cabinet 110 that forms an outer appearance thereof. The first cabinet 110 may have a first front panel 112 disposed at a front side. A laundry inlet in communication with interior of the first drum 12 may be defined in the first front panel 112. The laundry inlet may be opened and closed by a first cabinet door 17. The laundry or the like that requires the treatment may be put into the first cabinet 110 via the laundry inlet and accommodated in the first drum 12. The first treating apparatus 10 may treat the accommodated laundry. The first treating apparatus 10 may perform the treatment such as the washing and the drying on the accommodated laundry.

The first treating apparatus 10 may have a first side panel 115 on each side of the lateral direction (Y), may have a first rear panel (not shown) at a rear side, may have a first upper panel (not shown) at an upper side, and may have a first lower panel (not shown) at a lower side.

The first front panel 112, the first side panel 115, the first rear panel (not shown), the first upper panel 119, and the first lower panel (not shown) may be combined with each other to form the first cabinet 110 and may have coupling relationships with each other. The first cabinet 110 may define therein a space in which internal components constituting the first treating apparatus 10, such as the first drum 12, are disposed. A detergent opening is defined in the first front panel 112, and a detergent storage part 30 is inserted into and provided in the detergent opening. In the laundry treating apparatus 1 according to an embodiment, the first treating apparatus 10 is disposed on the ground. The detergent storage part 30 is positioned upward of the laundry inlet of the first treating apparatus 10, so that retraction and extension of the detergent storage part 30 may be conveniently provided. The detergent storage part 30 may be positioned between the laundry inlet of the first treating apparatus 10 and the control panel 2000. The detergent storage part 30 may be positioned upward of the laundry inlet of the first treating apparatus 10 and downward of the control panel 2000. The detergent storage part 30 may be retracted into the first cabinet 110 or extended outside the first cabinet 110 by a user. For example, the user may separate the detergent storage part 30 from the first cabinet 110, store the detergent in the detergent storage part 30, and then retract the detergent storage part 30 into the first cabinet 110.

In an embodiment, a filter opening is defined in the first front panel 112. A filter part 40 is inserted into and provided in the filter opening. The filter part 40 is a component that captures foreign substances from washing water. The filter part 40 may be retracted into the first cabinet 110 via the filter opening. The filter part 40 may be disposed at one side of a lower portion of the first front panel 112. The filter part 40 may be connected to a flow channel of washing water discharged from the tub 14. The filter part 40 may filter out the foreign substances from washing water discharged from the tub 14 after a washing process is performed. The role of the filter part 40 may not necessarily be limited thereto, and the filter part 40 may be designed to filter the foreign substances from various objects as needed. For example, the filter part 40 may be designed to filter the foreign substances from washing water for performing the washing cycle before the washing cycle is performed.

The user may retract or extend the filter part 40 into or out of the first cabinet 110 via the filter opening. The extended filter part 40 may be reused after washing or replaced. A retraction and extension cycle of the filter part 40 may be relatively longer in relation to that of the detergent storage part 30. Accordingly, an embodiment of the present disclosure may place the detergent opening into which the detergent storage part 30 having the relatively short retraction and extension cycle is retracted at an upper side of the first front panel 112. In addition, the filter opening into which the filter part 40 having the relatively long retraction and extension cycle is retracted may be placed at a lower side of the first front panel 112, thereby improving convenience of use and implementing a structure of the first front panel 112 having excellent space utilization.

The washing water discharge flow channel connected to the tub 14 inside the first cabinet 110 may be located at a lower side inside the first cabinet 110 to facilitate the discharge of washing water. In an embodiment of the present disclosure, the filter part 40 may be disposed at the lower side of the first cabinet 110 and may be efficiently connected to the washing water discharge flow channel.

The first treating apparatus 10 may be provided with a first device controller 19. The first device controller 19 is a component that controls various devices constituting the first treating apparatus 10. The first device controller 19 is disposed inside the first cabinet 110. The first device controller 19 may include a circuit board and electrical components mounted on the circuit board. In an embodiment, the first device controller 19 may identify information corresponding to a manipulation signal received from the control panel 2000 in a memory, and perform the device control corresponding to the manipulation signal using the information. The first device controller 19 may transmit a state of the first treating apparatus 10 to the control panel 2000.

In an embodiment, the second treating apparatus 20 is located on the first treating apparatus 10. The first treating apparatus 10 supports the second treating apparatus 20. The second treating apparatus 20 may correspond to a dryer for drying the laundry. The second treating apparatus 20 may have a second drum 22. The second drum 22 may accommodate the laundry therein. According to an embodiment, the second drum 22 has a rotation axis positioned in the forward/rearward direction (+X, -X).

The second treating apparatus 20 may include a second cabinet 120 forming an outer appearance thereof. The second cabinet 120 may include a second front panel 122 disposed at a front side. A laundry inlet in communication with the second drum 22 may be defined in the second front panel 122. The laundry inlet may be opened and closed by a second cabinet door 27.

The second treating apparatus 20 may have a second side panel 125 on each of both sides of the lateral direction (+Y, -Y). Furthermore, the second treating apparatus 20 may have a second rear panel (not shown) at a rear side, may have a second upper panel 127 at an upper side, and may have a second lower panel (not shown) at a lower side.

According to an embodiment, the second front panel 122, the second side panel 125, the second rear panel (not shown), the second upper panel 127, and the second lower panel (not shown) may be combined with each other to form the second cabinet 120 and may have coupling relationships with each other. The second cabinet 120 may define therein a space in which internal components constituting the second treating apparatus 20 are disposed, such as the second drum 22.

The laundry or the like that require the treatment may be accommodated inside the second drum 22 via the laundry inlet of the second treating apparatus 20. The second treating apparatus 20 may treat the accommodated laundry. The laundry accommodated in the second drum 22 may be subjected to the treatment, such as the washing and the drying, by the second treating apparatus 20.

The second treating apparatus 20 is disposed on the first treating apparatus 10. In an embodiment, a lower portion of the first treating apparatus 10 may be coupled with an upper portion of the second treating apparatus 20. An upper portion of the first treating apparatus 10 may have a structure that supports the second treating apparatus 20. For example, the first upper panel (not shown) of the first treating apparatus 10 may have a structure that directly or indirectly supports the second lower panel (not shown) of the second treating apparatus 20.

The second treating apparatus 20 may be provided with a second device controller 29. The second device controller 29 is a component that controls various devices constituting the second treating apparatus 20. The second device controller 29 is disposed inside the second cabinet 120. The second device controller 29 may include a circuit board and electrical components mounted on the circuit board. In an embodiment, the second device controller 29 may identify information corresponding to a manipulation signal received from the control panel 2000 in a memory, and perform the device control corresponding to the manipulation signal. The second device controller 29 may transmit a state of the second treating apparatus 20 to the control panel 2000.

The control panel 2000 is disposed between the first front panel 112 and the second front panel 122. It is preferable that the control panel 2000 is positioned at a vertical level corresponding to approximately a user's waist. When the control panel 2000 is positioned at the vertical level corresponding to approximately the user's waist, convenience of manipulation of the user may be improved. In an embodiment, the control panel 2000 is disposed upward of the first front panel 112 and downward of the second front panel 122, so that it is preferable to appropriately set heights of the first front panel 112 and the second front panel 122. In an embodiment, at least a portion of the first front panel 112 may face the side panel 125 of the second treating apparatus 20.

The control panel 2000 may be connected with at least one of the first treating apparatus 10 and the second treating apparatus 20 to transmit and receive signals. In an embodiment, the control panel 2000 is connected with the first treating apparatus 10 and the second treating apparatus 20 to transmit and receive the signals. In an embodiment, the control panel 2000 is connected with the first device controller 19 and/or the second treating apparatus to transmit and receive the signals 20. The connection described above may include wired connection or wireless connection.

A UI section 200 is provided on a front surface 2110 of the control panel 2000, where a user interface (UI) is displayed.

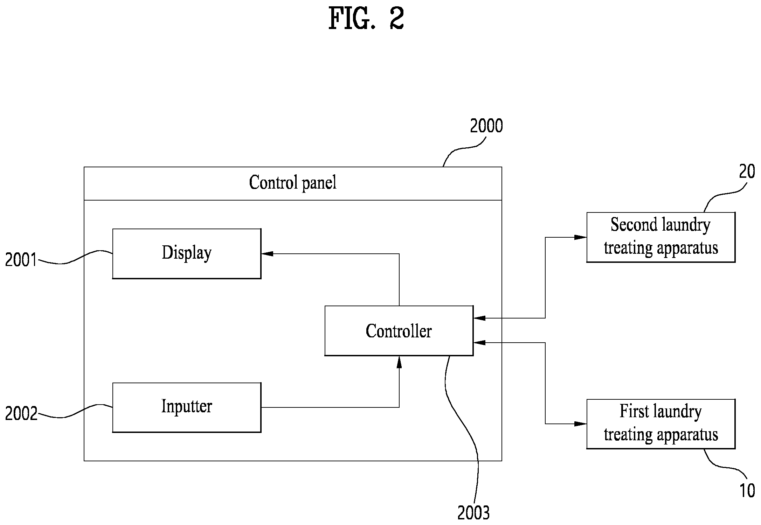

FIG. 2 is a simple illustration of relationships between the control panel 2000, and the first treating apparatus 10 and the second treating apparatus 20 according to an embodiment of the present disclosure.

According to an embodiment of the present disclosure, the control panel 2000 may include a display 2001, an inputter 2002, and a controller 2003. The UI section 200 may include the display 2001 and the inputter 2002.

The display 2001 is a component that displays one or more information for interaction with the user. The display 2001 may indicate the states of the first treating apparatus 10 and/or the second treating apparatus 20. The display 2001 may display the states of the first treating apparatus 10 and/or the second treating apparatus 20. The display 2001 is provided in the UI section 200. The display 2001 displays information on one or more of the first treating apparatus 10 and the second treating apparatus 20. In an embodiment, the information may include information on the course that may be executed in the first treating apparatus 10 and/or the second treating apparatus 20, information on the treatment being executed in the first treating apparatus 10 and/or the second treating apparatus 20 (e.g., a course name and a remaining time until the course is completed), information on the cycle in progress (e.g., a cycle name), information on set treatment option, information on a communication establishment state, information on remote control setting, information on a door lock state, information on drying preparation setting, information on turbo shot setting, information on steam setting, information on ironing reminder setting, information on wrinkle prevention setting, information on reservation setting, and the like.

The inputter 2002 is a component that receives a manipulation command for controlling the first treating apparatus 10 and/or the second treating apparatus 20 from the user. The inputter 2002 may be provided on the control panel 2000. The inputter 2002 may be provided as a touch screen. The inputter 2002 may be provided as a touch sensor. The inputter 2002 may be provided as a physical button.

The controller 2003 may have a microprocessor that executes the control of the first treating apparatus 10 and/or the second treating apparatus 20, and storage in which a control program for executing the operation of controlling the first treating apparatus 10 and/or the second treating apparatus 20 is stored. The control program may be stored in a storage medium of the storage, and the storage medium may be a hard disk, a disk such as a CD-ROM or a DVD, or a semiconductor memory such as a flash memory. The controller 2003 may be disposed inside the control panel 2000, that is, on a rear surface of the front surface 2110. One or more controllers 2003 may be provided. The controller 2003 may be connected to the first treating apparatus 10 and/or the second treating apparatus 20 and may exchange the signals therewith. The connection may include wired connection or wireless connection.

The controller 2003 may be connected to the display 2001 and/or the inputter 2002 and may exchange signals therewith. The above-described signal may be a control command, a user input, state information of the device, and the like. The controller 2003 may sense a manipulation signal of the inputter 2002. The controller 2003 may identify information corresponding to the input manipulation signal in a memory. The controller 2003 may transmit display data to the display 2001. The display 2001 may display the state of the first treating apparatus 10, the state of the second treating apparatus 20, and/or content of a command input from the user in response to the display data transmitted from the controller 2003. The controller 2003 may switch states of components constituting the inputter 2002 to an activated or deactivated state. The controller 2003 may switch states of components constituting the display 2001 to the activated or deactivated state. The controller 2003 may include a circuit board and electrical components mounted on the circuit board.

In an embodiment, the relationship in which the controller 2003 is included in the control panel 2000 has been described, but the controller 2003 may not be classified as the control panel 2000. The controller 2003 may be provided at a location other than the control panel 2000. The controller 2003 may be provided in the first treating apparatus 10 and/or the second treating apparatus 20. The controller 2003 may be provided in each of the control panel 2000, the first treating apparatus 10, and the second treating apparatus 20. The controller 2003 may be provided integrated with the first device controller 19 and/or the second device controller 29. Alternatively, the controller 2003 may be understood as a concept integrated with the first device controller 19 and/or the second device controller 29.

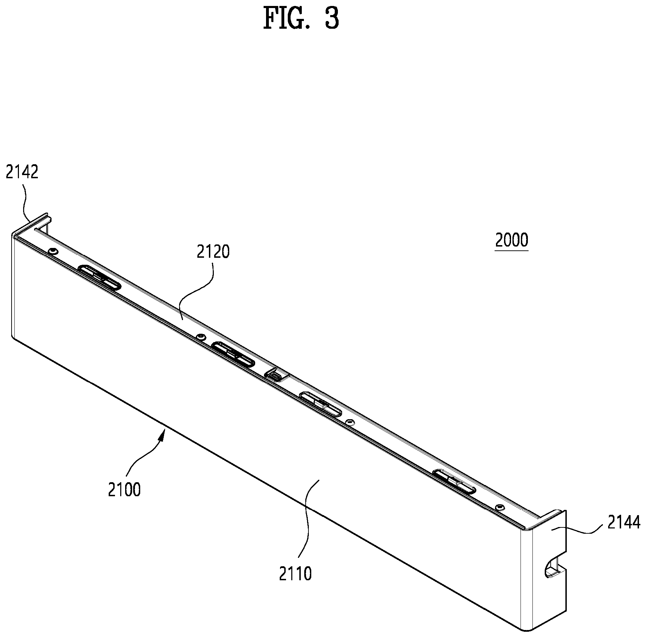

FIG. 3 is a front perspective view of a control panel according to an embodiment of the present disclosure. A description will be made with reference to FIG. 3.

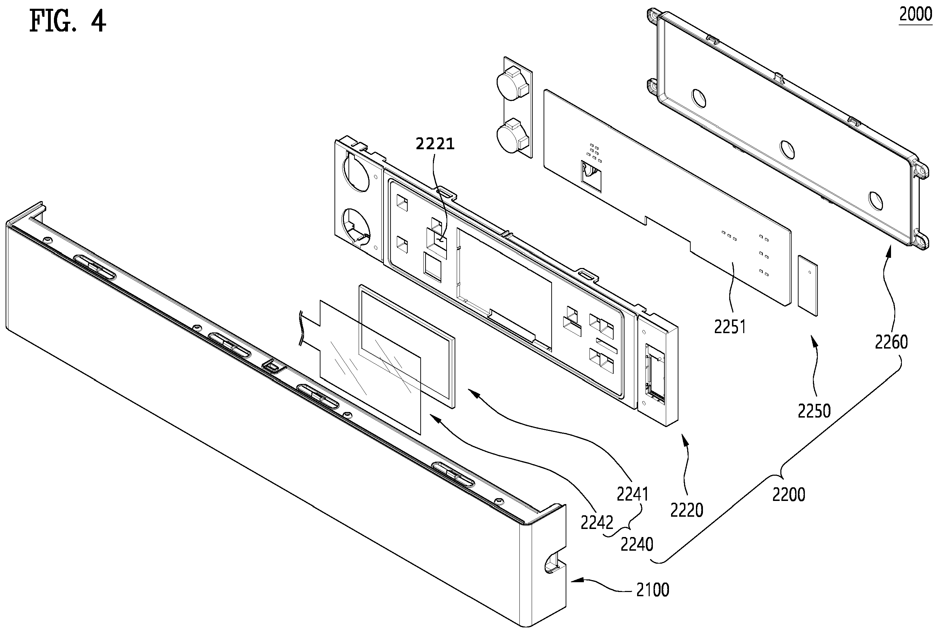

The control panel 2000 includes a cover panel 2100. An electrical module 2220 (see FIG. 4) is positioned at the rear of the cover panel 2100. The cover panel 2100 includes the front surface 2110, an upper surface 2120, a lower surface (not shown), a first side surface 2142, and a second side surface 2144. The front surface 2110 forms an outer appearance of the cover panel 2100. The upper surface 2120 extends rearward from an upper surface of the front surface 2110. The lower surface 2130 extends rearward from a lower surface of the front surface 2110. The first side surface 2142 extends rearward from a first side surface (e.g., a left side surface when viewed from the front) of the front surface 2110. The second side surface 2144 extends rearward from a second side surface (e.g., a right side surface when viewed from the front) of the front surface 2110.

FIG. 4 is an exploded perspective view of a control panel according to an embodiment of the present disclosure.

The control panel 2000 includes the cover panel 2100 and the electrical module 2220. The electrical module 2220 is coupled to the cover panel 2100 from the rear of the cover panel 2100. The electrical module 2220 includes a supporter 2220, a sealing cover 2230, a touch screen device 2240, and a circuit board 2250.

The touch screen device 2240 may include a combination of a flat display 2241 and a touch layer 2242. The flat display 2241 provides a screen that outputs an image. The flat display 2241 functions as a display that displays various types of information. In the description of the present disclosure, the flat display 2241 may mean a thin display and may be provided in various forms such as an LCD, a PDP, an AMLCD, a PMLCD, an OLED, an LED, and the like. In an embodiment, the touch layer 2242 may be provided in a form of a touch film or a coating film. In an embodiment, the touch layer 2242 may be composed of two ITO layers forming X and Y axes. The touch layer 2242 functions as an inputter that receives the user's touch input. In an embodiment, the touch screen device 2240 may also be implemented by a method not shown. For example, the touch screen device 2240 may be implemented by a resistive film scheme, a capacitive scheme, an infrared scheme, an ultrasonic scheme, and the like.

The supporter 2220 is a component that supports the flat display 2241. The supporter 2220 has a front surface in a panel form. The supporter 2220 is coupled with the upper surface 2120 and the lower surface (not shown) of the cover panel 2100. The flat display 2241 is located on a front surface of the supporter 2220. The flat display 2241 is supported by the supporter 2220. The flat display 2241 is located between the cover panel 2100 and the supporter 2220.

The sealing cover 2230 is located at the rear of the supporter 2220 and is coupled with the supporter 2220. The sealing cover 2230 covers the circuit board 2250. The sealing cover 2230 is located at the rear of the circuit board 2250. The circuit board 2250 is located in a space defined between the sealing cover 2230 and the supporter 2220.

A plurality of circuit boards 2250 may be provided. Some of the circuit boards 2250 may be covered by the cover panel 2100 to be blocked from being in contact with outside air. The circuit boards 2250 may be composed of a circuit board for a speaker to be described later, a circuit board 2251 for the flat display 2241 and a touch button provided as an input button, and a circuit board for a communication module. The circuit board for the flat display 2241 is electrically connected to the flat display 2241 and transmits a signal to the flat display 2241. In addition, it may receive a user's input signal via a user UI. In an embodiment, the circuit board for the flat display 2241 may be covered by the sealing cover 2230 to be blocked from being in contact with outside air.

The circuit board 2251 for the flat display 2241 among the circuit boards 2250 is provided with a touch button. The touch button is provided with a pair of a light-emitting member and a touch sensor. The touch button may be provided as a known component capable of receiving a touch input. The light-emitting member indicates whether the corresponding touch sensor is activated. For example, when the touch sensor is activated, the light-emitting member emits light. The light-emitting member may be provided as an LED element. The supporter 2220 may concentrate light diffused from the light-emitting member to a specific location. In an embodiment, the supporter 2220 has at least one sensor hole 2221 defined therein. The sensor hole 2221 is defined at a location corresponding to a location where the touch button is provided. The sensor hole 2221 forms a blocking wall extending forward or rearward from a periphery of the hole. The blocking wall prevents light emitted from the light-emitting member from diffusing to a periphery of the touch button. By positioning the circuit board 2510 at the rear of the supporter 2220, light of the touch button may be prevented from being diffused.

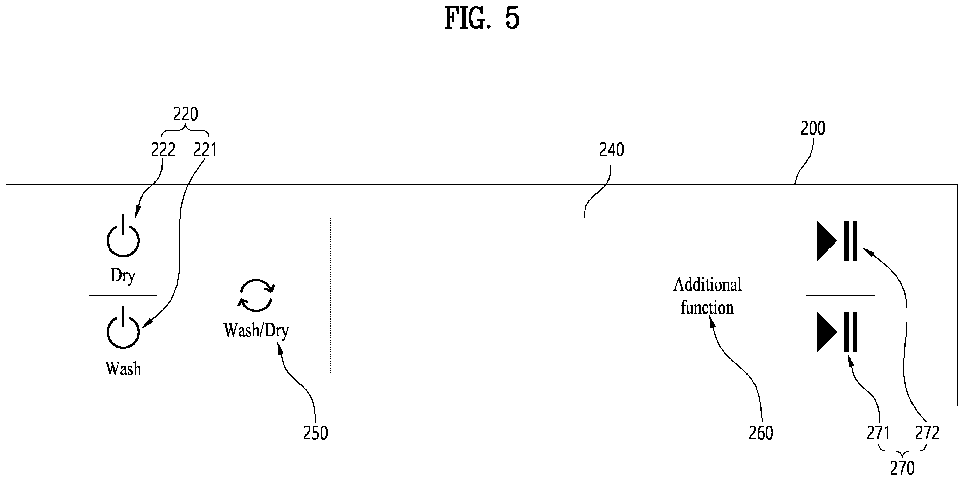

FIG. 5 illustrates the UI section 200 according to an embodiment of the present disclosure. The user interface (UI) is provided in the UI section 200. The user interface equipped in the UI section 200 may include a power button 220, a switching button 250, a touch screen 240, an additional function button 260, and an execution/pause button 270. The power button 220 may include a first power button 221 and a second power button 222. The execution/pause button 270 may include a first execution/pause button 271 and a second execution/pause button 272.

The first power button 221, the second power button 222, the switching button 250, the additional function button 260, the first execution/pause button 271, and the second execution/pause button 272 may be provided as touch sensors or physical buttons. The touch screen 240 may be provided by the touch screen device 2240.

The first power button 221 may be represented as an icon symbolizing power. The first power button 221 is a component to receive a user command for turning the first treating apparatus 10 on and off. In an embodiment, the first power button 221 is provided as the touch sensor. In an embodiment, when the user touches the first power button 221, the controller 2003 may receive a turn-on or turn-off command for the first treating apparatus 10.

The second power button 222 may be represented as an icon symbolizing power. The second power button 222 is disposed to occupy an area different from that of the first power button 221. In an embodiment, the first power button 221 and the second power button 222 may be arranged vertically. In an embodiment, the second power button 222 is disposed upward of the first power button 221. The second power button 222 is a component to receive a user command for turning the second treating apparatus 20 on and off. In an embodiment, the second power button 222 is provided as the touch sensor. In an embodiment, when the user touches the second power button 222, the controller 2003 may receive a turn-on or turn-off command for the second treating apparatus 20.

The first power button 221 and the second power button 222 may be provided as the separate touch sensors separated from a touch input component (e.g., the touch layer) for the touch screen 240. When the first power button 221 and the second power button 222 are provided in areas separated from the touch screen 240, malfunction of the device may be reduced. The laundry treating apparatus 1 is placed in an environment with a lot of moisture. When the touch input component (e.g., the touch layer) for the touch screen 240 has the area different from those of the first power button 221 and the second power button 222, touch malfunction caused by moisture may be minimized. For example, unintended issues, such as a change to an option of the first treating apparatus 10 resulted from the touch malfunction caused by the moisture, contrary to an intention of turning on the second treating apparatus 20 while the first treating apparatus 10 is in operation and accessing a second apparatus manipulation UI 400, may be prevented in advance.

The touch screen 240 may be disposed to occupy the area different from those of the first power button 221 and the second power button 222. The touch screen 240 may be implemented by the touch layer 2242 constituting one of the inputters 2002 and the flat display 2241 constituting one of the displays 2001. The touch screen 240 may output one of a first apparatus manipulation UI for controlling the first treating apparatus 10, the second apparatus manipulation UI 400 for controlling the second treating apparatus 20, and a composite UI in which operation information of the first treating apparatus 10 and the second treating apparatus 20 are displayed on a single screen. The first apparatus manipulation UI, the second apparatus manipulation UI 400, and the composite UI will be described in detail below.

The switching button 250 is disposed to occupy an area different from those of the first power button 221, the second power button 222, and the touch screen 240. The switching button 250 may be provided as the separate touch sensor separated from the touch layer 2242 constituting the touch screen 240. When the switching button 250 is provided in the area separated from the touch screen 240, the malfunction of the device may be reduced. The laundry treating apparatus 1 is placed in the environment with a lot of moisture. By differentiating the areas of the touch layer 2242 constituting the touch screen 240 and the switching button 250, the touch malfunction caused by the moisture may be minimized. For example, the unintended issues, such as the change to the option of the first treating apparatus 10 resulted from the touch malfunction caused by the moisture, contrary to the intention of turning on the second treating apparatus 20 while the first treating apparatus 10 is in operation and accessing the second apparatus manipulation UI 400, may be prevented in advance.

The switching button 250 may be represented as an icon symbolizing switching. The switching button 250 receives a user input for switching a control target. It is activated when both the first treating apparatus 10 and the second treating apparatus 20 are turned on. When the user command is input via the switching button 250 while the first apparatus manipulation UI is displayed on the touch screen 240, the control target is switched to the second treating apparatus 20, and the second apparatus manipulation UI 400 is displayed on the touch screen 240. When the user input is received via the switching button 250 while the second apparatus manipulation UI 400 is displayed on the touch screen 240, the control target is switched to the first treating apparatus 10, and the first apparatus manipulation UI is displayed on the touch screen 240. The switching button 250 is deactivated when at least one of the first treating apparatus 10 and the second treating apparatus 20 is turned off.

The additional function button 260 may be represented in a form of text of 'additional function'. The additional function button 260 is disposed to occupy an area different from those of the first power button 221, the second power button 222, the touch screen 240, and the switching button 250. The additional function button 260 receives a user input for setting an additional function of the first treating apparatus 10 and/or the second treating apparatus 20. In an embodiment, when the user touches the additional function button 260, an item for setting additional settings (e.g., reservation, notification sound volume, and the like) for the first treating apparatus 10 and/or the second treating apparatus 20 may be displayed on the touch screen 240.

The first execution/pause button 271 may be represented as an icon symbolizing execution or pause. The first execution/pause button 271 is disposed to occupy an area different from those of the first power button 221, the second power button 222, the touch screen 240, the switching button 250, and the additional function button 260. The first power button 221 receives a user input for executing or pausing operation of the washing machine 10.

The second execution/pause button 272 may be represented as an icon symbolizing the execution and the pause. The second execution/pause button 272 is disposed to occupy an area different from those of the first power button 221, the second power button 222, the touch screen 240, the switching button 250, the additional function button 260, and the first execution/pause button 271. The first execution/pause button 271 and the second execution/pause button 272 may be arranged vertically. In an embodiment, the second execution/pause button 272 may be positioned upward of the first execution/pause button 271. The second power button 222 receives a user command to execute or pause operation of the second treating apparatus 20.

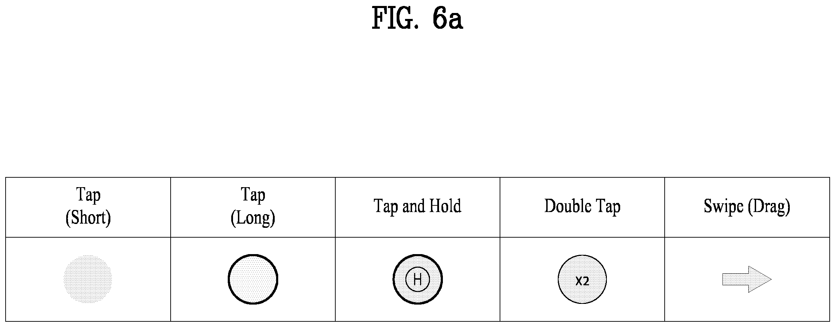

FIG. 6A is a table listing features of various gestures of touching a touch inputter (e.g., various buttons and a touch screen) in a manner distinguished for each touch gesture according to an embodiment of the present disclosure. In the description of the present disclosure, a plurality of touch input methods are applied. The plurality of touch input methods may be implemented by the various touch gestures. In drawings to be described below, user's gestures of transmitting a touch command are expressed using the features illustrated in FIG. 6A.

A tap (short) gesture is a method of inputting a command by a user's gesture of briefly touching the touch screen 240. The tap (short) gesture may be described as a gesture in which the user briefly and lightly taps the touch screen 240 with a finger. A set function may be executed by the input command. In the present document, a feature representing the tap (short) gesture is a filled circle without a border.

A tap (long) gesture is a method of inputting a command by a user's gesture of touching the touch screen 240 for a set time or longer. A set function may be executed by the input command. In general, 'touching for a set time or longer' is expressed as 'touching for a long time'. The 'gesture of touching for the set time or longer' may mean 'a gesture of touching a specific portion of the touch screen 240 and not lifting the finger until a set response occurs'. A time for which the touch is maintained, that is, a time for which the finger is not lifted, may vary depending on settings, but it may be set to approximately 1 second or greater as a time for which the user feels that the touch has been held beyond a feeling of simply touching. In the present document, a feature representing the tap (long) gesture is a filled circle with a border.

A tap and hold gesture is a method of inputting a command by a user's gesture of continuously touching the touch screen 240 for a long time. For example, the tap and hold gesture may input different commands depending on a time for which the user continues to touch. A set function may be executed by the input command. When the tap and hold gesture is sensed, different outputs are generated depending on the touch duration. For example, a gesture of continuously pressing a scroll arrow to move a list corresponds to the tap and hold gesture. In the present document, a feature representing the tap and hold gesture is a filled circle with a border and '_'written inside.

A double tap gesture is a method of inputting a command by a user's gesture of performing two consecutive short touches on the touch screen 240. A feature representing the double tap gesture is a filled circle with a border and 'x2' written inside.

A swipe gesture is a method of inputting a command by a user's gesture of touching a certain location on the touch screen 240 and moving the finger to another location without lifting the finger. Based on a general definition, the swipe gesture is a gesture of swiping while placing the finger on the touch screen 240. A feature representing the swipe gesture is a filled arrow without a border. A direction of the arrow may be defined depending on a direction of movement of the finger.

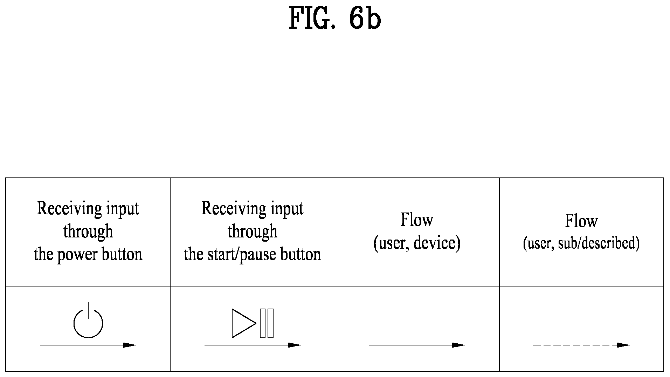

FIG. 6B represents a flow in which an image displayed on a screen is switched, and is a table that lists features that are expressed in a manner distinguished based on a reason for an occurrence of the flow. In drawings to be described below, the flow in which the image is switched is simply expressed using the features illustrated in FIG. 6B.

A flow in which a change occurs by receiving the input through the power button is expressed by a combination of a solid arrow and an icon symbolizing power placed adjacent to the solid arrow.

A flow in which a change occurs by receiving the input through the execution/pause button is expressed by a combination of a solid arrow and an icon symbolizing execution/pause placed adjacent to the solid arrow.

A flow in which a change occurs by the input of the user's command through the UI section 200 is expressed by a solid arrow. A flow in which a change occurs by an occurrence of an unusual situation (e.g., an occurrence of an error, a warning, a user notification, and the like) in the laundry treating apparatus 1 is also expressed by a solid arrow.

A flow in which a change occurs by preset programming or the like even though the user's command is not received is expressed by a dotted arrow. For example, it may occur when a preset condition is satisfied by the preset programming or the like.

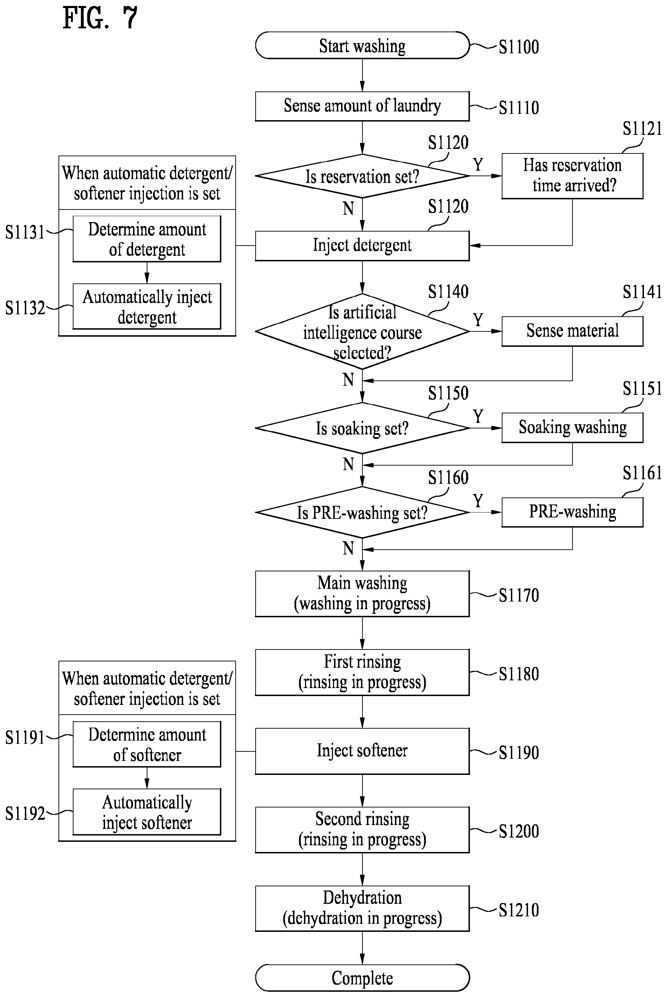

FIG. 7 illustrates a cycle flow according to an embodiment when a washing machine is provided as a first treating apparatus or a second treating apparatus according to an embodiment of the present disclosure. The cycle flow according to an embodiment will be described with reference to FIG. 7. In the description of the present disclosure, the washing machine is provided as an embodiment of the first treating apparatus 10.

The user puts an object-to-be-washed that requires to be treated into the first drum 12. The user may close the first cabinet door 17 of the first treating apparatus 10 and input an execution command to start the washing. By the user's command, the washing treatment may be started (S1100). The washing treatment may be performed based on a washing course selected by the user. In the present document, the washing course is defined as a series of control methods for treating the object-to-be-washed by controlling the components of the first treating apparatus 10, such as an operation of rotating the first drum 12, an operation of supplying water, the detergent and/or the softener into the first drum 12, and an operation of draining washing water filled in the first drum 12.

Prior to various actual cycles related to the washing treatment, an amount of objects-to-be-washed is sensed (S1110). In cycles to be processed thereafter, an amount of detergent, an amount of softener, an amount of washing water required for the washing, an amount of rinsing water required for rinsing, a washing time, a rinsing time, a dehydration time, and the like may be set, based on the sensed amount of laundry.

Whether a reservation is set is determined (S1120). The reservation may be set via a reservation option. The reservation option may mean an option to delay a time when the course ends. Such reservation option is very useful when going out for a long time. In other words, the washing may be set to end based on a time of returning home. Therefore, it may prevent waiting for the end of the washing or leaving the laundry that has been washed in the washing machine for a long time. When the reservation is set (Y), a next step is performed when a reservation time arrives (S1121). When there is no reservation setting (N), the next step is performed immediately.

The detergent required for the washing is injected into the first drum 12 (S1130). In an embodiment, the detergent may be supplied together with washing water. When an 'automatic detergent/softener injection' function is set as an additional function of the first treating apparatus 10, an amount of detergent to be injected is determined based on the sensed amount of laundry (S1131), and the detergent is automatically injected (S1132).

In an embodiment, the first treating apparatus 10 may provide an artificial intelligence course as an example of the washing course. The AI course is a course that senses characteristics and a contamination level of the laundry and performs a series of washing cycles with an option selected as an optimal condition. Whether the selected course is the artificial intelligence course is identified (S1140). When the AI course is selected (Y), a step of sensing a material of the object-to-be-washed is performed (S1141). The step of sensing the material of the object-to-be-washed may be implemented by various methods. Specific details of the material sensing will not be described in the present document.

In an embodiment, the first treating apparatus 10 may provide a soaking option as one of the washing options. The soaking option is an option of soaking the laundry by leaving the object-to-be-washed to be immersed in washing water for a set time while the washing cycle is in progress. Whether the soaking option is set as the washing option is identified (S1150). When the soaking option is selected (Y), a step of performing soaking washing may be performed (S1141). The soaking washing may be applied in a main washing cycle (S1170) to be described later.

In an embodiment, the first treating apparatus 10 may provide a pre-washing option as one of the washing options. The pre-washing option is an option that adds a pre-washing cycle. The pre-washing cycle is pre-treatment of the laundry prior to the main washing cycle (S1170), and is a cycle that washes the laundry more simply than the main washing cycle. Whether the pre-washing option is set as the washing option is identified (S1160). When the pre-washing option is selected (Y), a step of performing pre-washing is performed (S1161).

The main washing cycle is performed (S1170). While the main washing cycle is in progress, a first apparatus manipulation UI 300 may display 'washing in progress'. The main washing cycle is a cycle that separates contamination from the object-to-be-washed using washing water containing the detergent. In the main washing cycle, friction and falling of the object-to-be-washed are caused by rotating the first drum 12 clockwise and counterclockwise alternately. The object-to-be-washed and the contamination may be separated from each other by the friction, the falling, and a surfactant action of the detergent.

A first rinsing cycle (S1180) is performed. While the first rinsing cycle is in progress, the first apparatus manipulation UI 300 may display 'rinsing in progress'. The first rinsing cycle is a cycle that separates contamination from an object-to-be-washed using water. In an embodiment, the contamination separated in the main washing cycle may be removed in the first rinsing cycle. In an embodiment, washing water used in the main washing cycle may be drained in the first rinsing cycle. New water is supplied to the first drum 12 from which washing water has been drained, and the first drum 12 is rotated to separate the contamination from the object-to-be-washed. In the first rinsing cycle, a draining step of discharging water filled in the first drum 12 and a water supply step of supplying new water to the first drum 12 may be performed one or more times. In an embodiment, the number of times the draining and the water supply are performed in the first rinsing cycle may be set by the user.

When the setting is made, the softener is injected into the first drum 12 (S1190). In an embodiment, the softener may be supplied together with water. When the 'automatic detergent/softener injection' function is set as the additional function of the first treating apparatus 10, an amount of softener to be injected is determined based on the sensed amount of laundry (S1191), and the softener is automatically injected (S1192). The injected softener softens the object-to-be-washed.

A second rinsing cycle (S1200) is performed. While the second rinsing cycle is in progress, the first apparatus manipulation UI 300 may display 'rinsing in progress'. The second rinsing cycle is a cycle that rinses the object-to-be-washed using water. In an embodiment, in the second rinsing cycle, water containing the softener filled in the first drum 12 is drained, new water is supplied to the first drum 12, and the first drum 12 is rotated.

A dehydration cycle (S1210) is performed. The dehydration cycle is a cycle of removing water from the object-to-be-washed. In the dehydration cycle, water filled in the first drum 12 is drained. After water filled in the first drum 12 is drained, the first drum 12 is rotated. A centrifugal force resulted from the rotation acts on water absorbed in the object-to-be-washed, so that water is removed from the object-to-be-washed. In an embodiment, the first drum 12 may rotate alternately clockwise and counterclockwise. As the rotation directions alternate, a phenomenon of the objects-to-be-washed becoming entangled with each other may be prevented.

The object-to-be-washed may be washed via the above-described series of processes. The series of processes in which the object-to-be-washed is washed may be called the washing course. The washing course is a type of treatment course for treating the laundry. In an embodiment, the treatment of the laundry is washing of the laundry. A series of processes of treating the laundry using a combination of various factors (e.g., the various cycles, a water temperature, an amount of water, and the like) may be defined as the washing course.

The washing course may be variously provided. In an embodiment, a plurality of washing courses may be defined and provided. The defined plurality of washing courses may be provided so as to be selectable by the user via the UI section 200. The user may select one of the set plurality of washing courses and proceed with the series of treatments using the first treating apparatus 10.

The washing course may be variously provided based on the cycles that constitute the respective steps. One or more washing courses may be defined as different washing courses depending on a presence of each cycle. One or more washing courses may be defined as different washing courses depending on a presence of the additional function setting. One or more washing courses may be defined as different washing courses depending on various numerical values defined and set for the washing. The various numerical values defined and set may be provided as numerical values optimized for washing the object-to-be-washed.

In an embodiment, the cycle, the additional function, and/or the various numerical values (the water temperature, the number of times the rinsing is performed, a drum rotation RPM, a washing time, a dehydration time, and the like) may be different for each washing course. To distinguish the various washing courses from each other, each washing course may have a unique name (a washing course name). For example, the washing course may be named to reveal characteristics of the washing course, such as 'standard washing', 'small amount rapid', 'wool/delicate', and "artificial intelligence course'.

The user may select one of the set plurality of washing courses. In an embodiment, at least one of the plurality of washing courses is provided with one or more options. In an embodiment, a plurality of options may be provided for the at least one washing course. In a washing course in which preset elements are provided as default elements, an element that provides, to the user, a choice of change among the preset elements may be defined as the option. The option may be defined as one or more elements that may be changed or selected by the user among the elements that constitute the washing course, and/or a combination thereof.

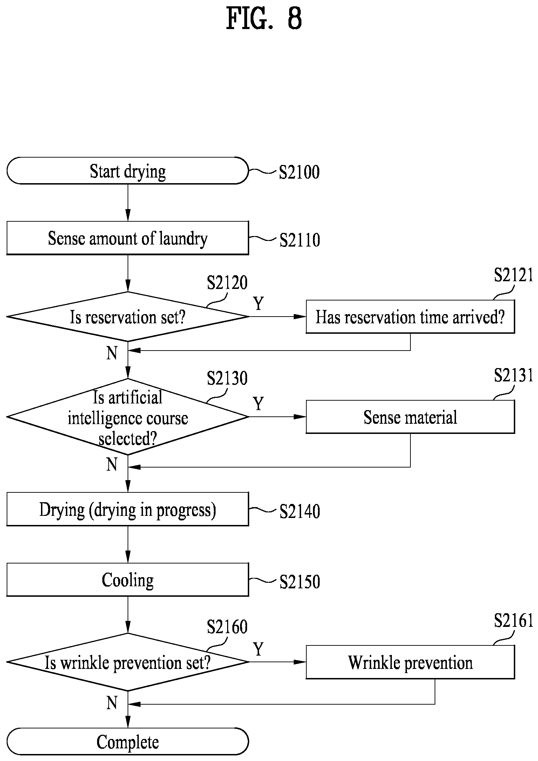

FIG. 8 illustrates a cycle flow according to an embodiment when a dryer is provided as a first treating apparatus or a second treating apparatus according to an embodiment of the present disclosure. The cycle flow according to an embodiment will be described with reference to FIG. 8. In the description of the present disclosure, the dryer is provided as an embodiment of the second treating apparatus 20.

The user puts the object-to-be-washed that requires to be treated into the second drum 22. The user may close the second cabinet door 27 of the second treating apparatus 20 and input an execution command to start the drying. A drying treatment may be started by the user's command (S2100). The drying treatment may be performed based on a drying course selected by the user. In the present document, the drying course is defined as a series of control methods for treating an object-to-be-dried by controlling the components of the second treating apparatus 20, such as an operation of rotating the second drum 22 and an operation of discharging moisture by replacing air inside the second drum 22 using a heat exchanger (not shown) such as a heat pump.

Prior to various actual cycles related to the drying treatment, an amount of the object-to-be-dried is sensed (S2110). In the cycles to be processed thereafter, a drying time, a cooling time, whether to supply steam, and the like may be set based on the sensed amount of laundry.

Whether a reservation is set is determined (S2120). When the reservation is set (Y), a next step is performed when a reservation time arrives (S2121). When there is no reservation setting (N), the next step is performed immediately.

In an embodiment, the second treating apparatus 20 may provide an artificial intelligence course as an example of the drying course. The artificial intelligence course is a course that senses characteristics and a weight of the objects-to-be-dried and performs a series of drying cycles with an option selected as an optimal condition. Whether the selected course is the artificial intelligence course is identified (S2130). When the artificial intelligence course is selected (Y), a step of sensing a material of the object-to-be-dried is performed (S2131). The step of sensing the material of the object-to-be-dried may be implemented by various methods. Specific details regarding the laundry material sensing are not described in the present document.

The drying cycle is performed (S2140). While the drying cycle is in progress, the second apparatus manipulation UI 400 may display 'drying in progess'. The drying cycle is a cycle that separates moisture contained in the object-to-be-dried from the object-to-be-dried. In the drying cycle, internal air of the second drum 22 is circulated. As air is circulated, the moisture is removed. The moisture may be removed from the object-to-be-dried by air from which moisture has been removed. In the drying cycle, the second drum 22 may rotate clockwise, rotate counterclockwise, or alternately rotate clockwise and counterclockwise. The object-to-be-dried may be dropped by the rotation of the second drum 22. During the process of the object-to-be-dried being dropped, an area in contact with air may increase and a drying efficiency may be increased.

A cooling cycle is performed (S2150). The cooling cycle is performed after the drying cycle. The cooling cycle is a cycle that lowers an internal temperature of the second drum 22 to a temperature equal to or lower than a set temperature. Because it may be dangerous as the internal temperature of the second drum 22 is high after the drying cycle, the cooling cycle is performed to lower the internal temperature of the second drum 22.

In an embodiment, the second treating apparatus 20 may provide a wrinkle prevention option as one of drying options. When the wrinkle prevention option is set, the second drum 22 rotates periodically even after the drying course ends such that the object-to-be-dried is not wrinkled after the drying cycle is completed. Whether the wrinkle prevention option is set as the drying option is identified (S2160). When the wrinkle prevention option is selected (Y), a wrinkle prevention operation may be performed until a set time (S2161). The set time may be set as a time when the user opens the second cabinet door 27 to take the object-to-be-dried that has been dried out from the second treating apparatus 20. The set time may be set to a time after a certain amount of time has elapsed since the preceding cycle was completed.

With the above-described series of processes, the object-to-be-dried may be dried. The series of processes of drying the object-to-be-dried may be called the drying course. The drying course is a type of treatment course of treating the laundry. In an embodiment, the treatment of the laundry is the drying of the laundry. The series of processes of treating the object-to-be-dried using a combination of various factors (e.g., various cycles, an air temperature, a drying time, and the like) may be defined as the drying course.

The drying courses may be variously provided. In an embodiment, a plurality of drying courses may be defined and provided. The defined plurality of drying courses may be provided so as to be selectable by the user via the UI section 200. The user may select one of the set plurality of drying courses and proceed with the series of treatments using the second treating apparatus 20.

The drying course may be variously provided based on the cycles that constitute the respective steps. One or more drying courses may be defined as different drying courses depending on a presence of each cycle. One or more drying courses may be defined as different drying courses depending on a presence of the additional function setting. One or more drying courses may be defined as different drying courses depending on various numerical values defined and set for the washing. The various numerical values defined and set may be provided as numerical values optimized for drying the object-to-be-dried.

In an embodiment, the cycle, the additional function (a steam supply option and the wrinkle prevention option), and/or the various numerical values (the air temperature, the drying time, a drum rotation RPM, and an amount of steam) may be different for each drying course. To distinguish the various drying courses from each other, each drying course may have a unique name (a drying course name). For example, the drying course may be named to reveal characteristics of the drying course, such as 'standard drying', 'small amount rapid', 'wool/delicate', and 'strong drying'.

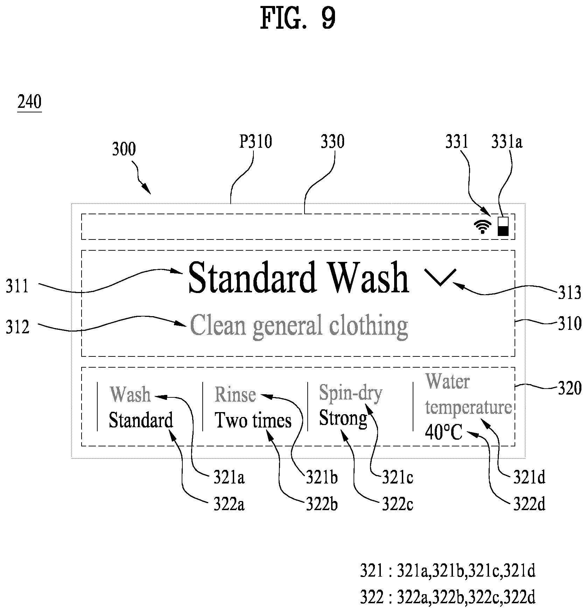

FIGS. 9, 10, and 11 illustrate a state in which the first apparatus manipulation UI 300 according to an embodiment of the present disclosure is displayed on the touch screen 240, and a course selection page P310 according to an embodiment is output.

A description will be made with reference to FIG. 9. The course selection page P310 of the first apparatus manipulation UI 300 may be output on the touch screen 240. The course selection page P310 according to an embodiment includes a course display portion 310, an option display portion 320, and an indicator display portion 330. In the course selection page P310, the course display portion 310 may occupy a middle area, the indicator display portion 330 may occupy an upper area, and the option display portion 320 may occupy a lower area. The indicator display portion 330 may be disposed upward of the course display portion 310, and the option display portion 320 may be disposed downward of the course display portion 310.

The course display portion 310 displays a course name 311, a course description 312, and a course browser 313.

The course name 311 is a name of a specific treatment course currently in a specified state among the plurality of treatment courses provided by the first treating apparatus 10. The course description 312 is a description of the specific treatment course. The treatment course and the course name 311 provided in the first apparatus manipulation UI 300 may correspond to a name of the washing course. The treatment course and the course description 312 provided in the first apparatus manipulation UI 300 may correspond to a description of the washing course. In an embodiment, a course description of the 'standard washing' is 'clean general laundry'. The course name 311 may be positioned upward of the course description 312. A font size for the course name 311 may be greater than a font size for the course description 312.

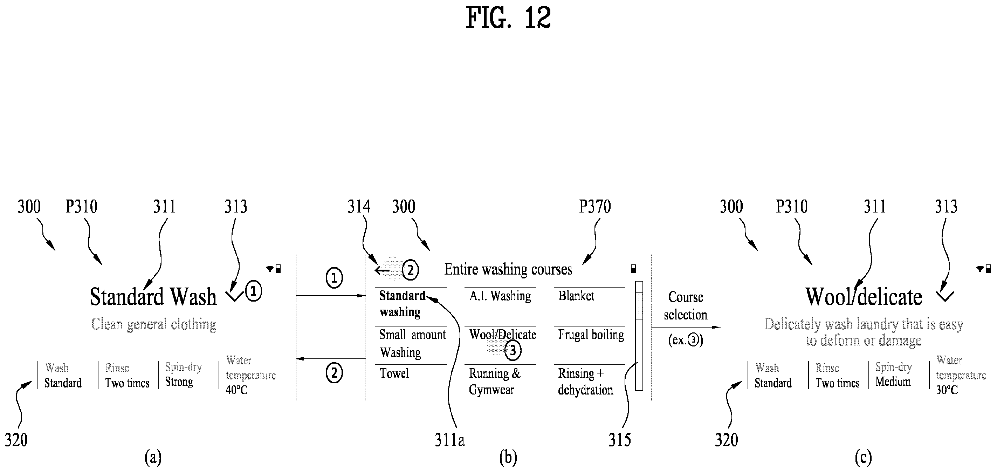

In an embodiment, the course browser 313 is positioned at the rear of the course name 311. The course browser 313 may be positioned on a horizontal line overlapping the course name 311. A location of the course browser 313 may vary depending on a length of the course name 311. The course browser 313 may be provided in a form of an icon. In the illustrated embodiment, the course browser 313 is expressed in a form of a "V" . The course browser 313 functions as an inputter. In an embodiment, when the course browser 313 is displayed, the touch screen 240 may output the course browse page (see the description of FIG. 12) when a touch input is received for a set area. Here, the set area receiving the touch input functions as a first inputter. In an embodiment, the set area may be an area including an area where the course name 311 and the course browser 313 are displayed. That is, the first inputter may be provided to overlap an area including the course name 311 where the specific treatment course is displayed and the course browser 313 in the course selection page P310.

The course browse page (see the description of FIG. 12) is a page where a plurality of course names corresponding to the plurality of treatment courses are output as a list. The set area that functions as the inputter in the course browser 313 may be an area where an icon representing the course browser 313 and/or the course name 311 are displayed.

The option display portion 320 displays option information. Various options may be provided for the treatment course. The option provides the user with a choice or a setting right such that a default setting value preset for each treatment course may be changed to a different setting value based on a user's request (input). In an embodiment, various options that may change preset values or conditions in the specific treatment course may be selected. Such options may be provided on the premise of the selection of the specific treatment course. The options may be changing a condition of each cycle included in the treatment course, performing an additional cycle, and/or changing a course execution completion time (reservation setting).

In an embodiment, the option display portion 320 displays an option name 321 and a setting value 322. The option name 321 is a name of an option. The setting value 322 is a value or a condition of the option corresponding to the option name 321. The option name 321 may be positioned upward of the setting value 322.

The illustrated embodiment is a case in which the treatment course is the washing course. In an embodiment, the washing course may provide a washing option, the number of times the rinsing is performed, a dehydration intensity, and a water temperature as the options. An option name 321a of the washing option may be 'washing'. An option name 321b of the number of times the rinsing is performed may be 'rinsing'. An option name 321c of the dehydration intensity may be 'dehydration'. An option name 321d of the water temperature may be 'water temperature'.

According to an embodiment, the setting value 322 provided in each option of the washing course may provide a plurality of preset setting values, and one of them may be selected. In an embodiment, the 'washing option" may provide choices such as 'no', 'little dirt', 'standard', and 'strong' as the setting value 322.

As another embodiment that is not illustrated, a case in which the treatment course is the drying course will be described. In an embodiment, the drying course may provide an economy mode, a drying degree, a drying time, and wrinkle prevention as options. An option name of the economy mode may be 'economy mode'. An option name of the drying degree may be 'drying degree'. An option name of the drying time may be 'drying time'. An option name of the wrinkle prevention may be 'wrinkle prevention'.

According to an embodiment, a setting value provided in each option of the drying course may provide a plurality of preset setting values, and any one of them may be selected. In an embodiment, the 'wrinkle prevention' may provide choices of 'on' and 'off' as setting values.

When the user does not change the setting value 322, it is output as a preset default value. The default value may be provided as a preset value for each washing course. When the setting value 322 is changed from the default value and used, a value with a high usage frequency may be stored and updated as the default value based on a usage frequency of the changed setting value 322.

In an embodiment, any of the plurality of treatment courses may provide one or more options among the plurality of options that the first treating apparatus 10 may provide. The one or more options provided by any of the treatment courses are defined as provided options.

In the option display portion 320, among the provided options, provided options that allow the user to change the setting values are displayed in a first appearance, and provided options that do allow the user to change the setting values are displayed in a second appearance. A state illustrated in FIG. 9 indicates the state in which the user may change the setting value, and is an example of the first appearance.

The option display portion 320 may display an option set. The option set is a set composed of a plurality of preset options among the plurality of options. In an illustrated embodiment, the option set may be composed of the 'washing', the 'rinsing', the 'dehydration', and the 'water temperature'. An option configuration of the option set is displayed in the same manner even when the specific treatment course is changed. However, the default values of the setting values may be provided differently depending on the specific treatment course. The specific treatment course may not provide some of the options included in the option set.

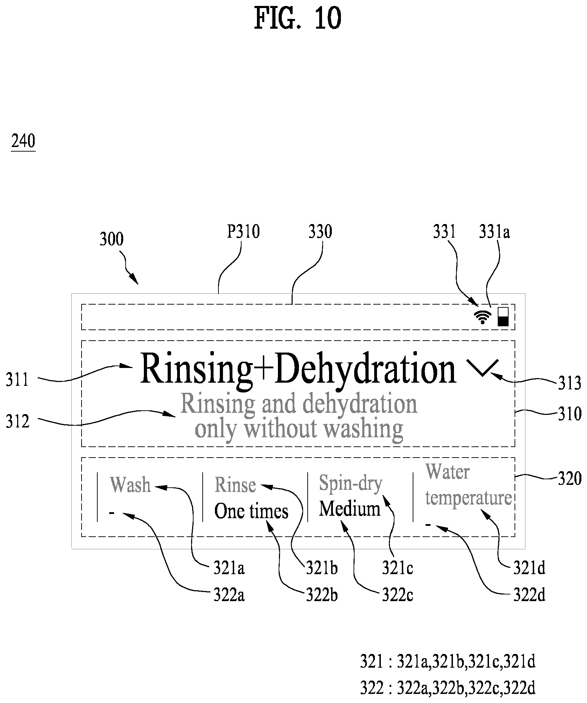

Refer to FIG. 10. FIG. 10 illustrates a view in which 'rinsing+dehydration' among the treatment courses is specified as the specific treatment course. The 'rinsing+dehydration' course does not provide some of the options included in the option set. In an embodiment, the option set includes the washing option, the number of times the rinsing is performed, the dehydration intensity, and the water temperature. The 'rinsing+dehydration' course does not provide the washing option and the water temperature among the options. In a case of the option not provided by the specific treatment course, the setting value may be displayed as '-'.

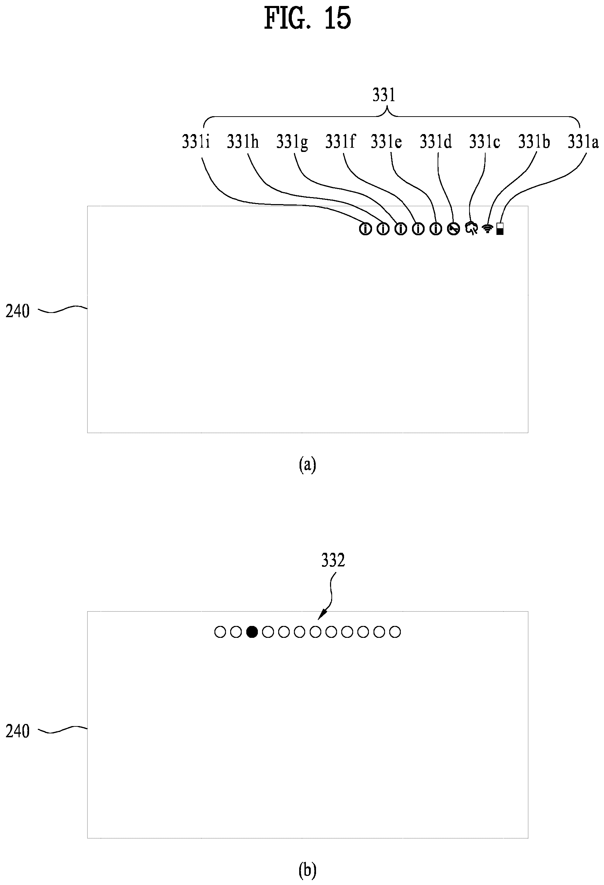

One or more indicators 331 may be displayed in the indicator display portion 330. The indicator 331 is a component that indicates state information and setting information of the device. The indicator 331 may be displayed as an icon. The indicator 331 may be displayed as each icon corresponding to each information. As the number of displayed indicators 331 increases, the indicators may be accumulated from a first side to a second side and may be displayed so as not to overlap each other. In an embodiment, the first side may be a left side and the second side may be a right side. The indicators 331 may be displayed in an order based on a priority. In an embodiment, the higher the priority, the more the indicator is located relatively to the left, and the lower the priority, the more the indicator is located relatively to the right. An embodiment regarding the indicator 331 that may be provided in the first apparatus manipulation UI 300 will be described in more detail in FIG. 15.

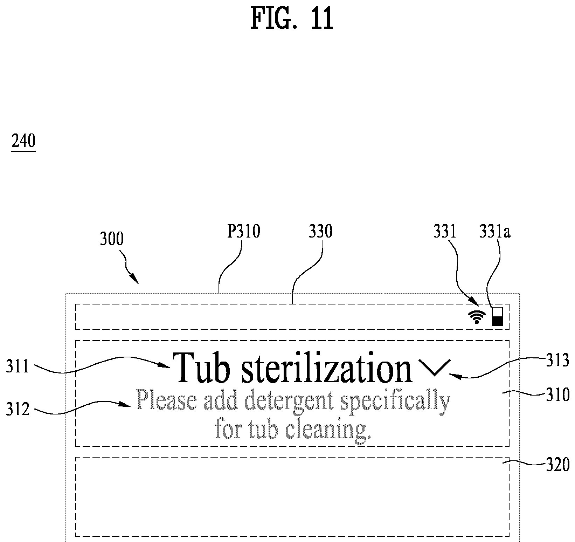

Refer to FIG. 11. FIG. 11 illustrates a view in which 'tub sterilization' is specified as a specific treatment course among treatment courses. In an embodiment, there may not be any options that may be selected in the course selection page P310. When there are no selectable options, nothing may be displayed in the option display portion 320. In an embodiment, a 'tub sterilization' course does not have any options that may be selected in the option display portion 320. The 'tub sterilization' course may not display anything in the option display portion 320.

FIG. 12 illustrates a flow of changing a specific treatment course via a course browser page, in which the first apparatus manipulation UI 300 according to an embodiment of the present disclosure is displayed on the touch screen 240. A description will be made with reference to FIG. 12.

An image illustrated in (a) is the course selection page P310. The course selection page P310 is output on the touch screen 240. The course browser 313 is selected in the course selection page P310. The course browser 313 may be selected by a user's touch ① on the area where the course browser 313 is provided.

An image illustrated in (b) is a course browse page P370. The course browse page P370 is output on the touch screen 240. The course browse page P370 outputs a plurality of course names corresponding to the plurality of treatment courses as a list. When the washing machine is provided as an embodiment of the first treating apparatus 10, the course names output as the list may be the course names of the washing course. When the course browse page is entered on the second apparatus manipulation UI 400, course names output as the list may be the course names of the drying course when the second treating apparatus 20 is provided as the dryer.

In an embodiment, among the plurality of course names output as the list, the course name of the specific treatment course is displayed to be distinguished from other course names. In an embodiment, the course name of the specific treatment course and other course names are displayed in different colors to be distinguished from each other. In an embodiment, the illustrated specific treatment course, the 'standard washing', may be provided as letters 311a having a first color. The first color is a color that is the same as or recognized as the same as a color of an indicator 331a indicating a 'screen occupying apparatus' in the first apparatus manipulation UI 300 to be described below and a color of a progress indicating bar 360 in the first apparatus manipulation UI 300. Other course names may be provided as letters having a third color that is distinguished from the first color.

Because the touch screen 240 has a limited screen size, the plurality of course names may not be entirely displayed in one image. In an embodiment, the course browse page P370 may display some of the plurality of course names output as the list, and the rest may be displayed by user's scrolling. When a user input via the course browser 313 is received while a first treatment course is displayed as the specific treatment course in the course selection page P310, the course browse page P370 is displayed, and a portion where a course name of the first treatment course is displayed is displayed first in the course browse page P370. In an illustrated embodiment, the first treatment course is the 'standard washing'.

In the course browse page P370, a treatment course desired by the user may be selected as the specific treatment course. When one of the plurality of course names is selected, a treatment course of the selected course name is specified as the specific treatment course. In an embodiment, a 'wool/delicate' course may be selected by a user's touch ③. When the course is selected, the course selection page P310 with the selected treatment course as the specific treatment course is output. When a back button 314 is touched ② in the course browse page P370, the course selection page P310 with the existing specific treatment course maintained is output.

An image illustrated in (c) is the course browse page P370 where the specific treatment course is changed to the 'wool/delicate' course by selecting the 'wool/delicate' course in the course browse page P370.

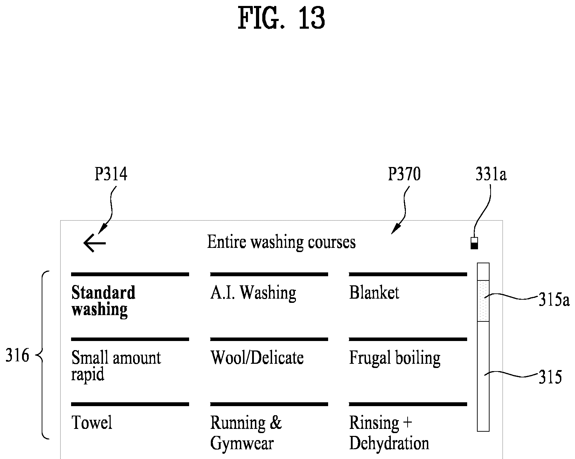

FIG. 13 illustrates a view in which the course browse page P370 of the first apparatus manipulation UI 300 according to an embodiment of the present disclosure is output. Refer to FIG. 13.

The course browse page P370 includes a course display area 316, a scroll bar 315, and the back button 314. The indicator 331a indicating the 'screen occupying apparatus' may be further displayed in the course browse page P370. The indicator 331a will be described in detail later.

The course names of the plurality of treatment courses are listed in the course display area 316. By manipulating the scroll bar 315, course names of other treatment courses are displayed in the course display area 316. That is, the user may view the entire treatment courses by manipulating the scroll bar 315. In an embodiment, the viewing of the treatment course using the scroll bar 315 has been described, but other schemes such as a swipe gesture may be applied.

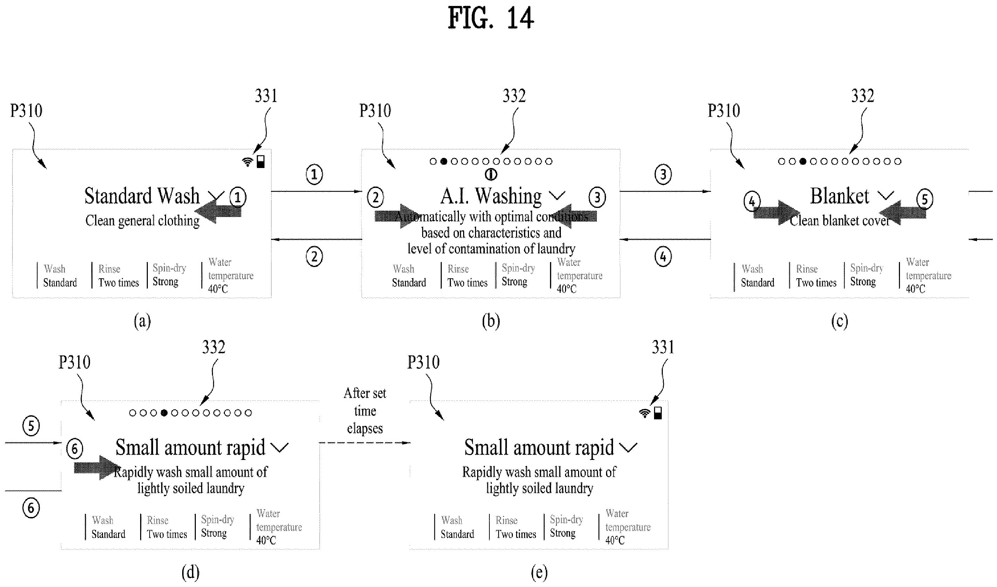

FIG. 14 illustrates a flow of changing a specific treatment course via a swipe input in the course selection page P310 of the first apparatus manipulation UI 300 according to an embodiment of the present disclosure. A description will be made with reference to FIG. 14.

The user may change the specific treatment course by inputting the swipe gesture in the course selection page P310. The swipe gesture is a touch input scheme in which a portion of the touch screen 240 is touched and the finger is moved in a certain direction while maintaining the touch. The specific treatment course may be changed depending on the swipe direction.

An image illustrated in (a) is the course selection page P310 in which the first treatment course (illustrated example: standard washing) is specified as the specific treatment course. The course selection page P310 is output on the touch screen 240. The specific treatment course may be changed by inputting the swipe gesture. The user may change the specific treatment course by touching the touch screen 240 and inputting the swipe gesture. In an embodiment, the specific treatment course is provided as the first treatment course. In the illustrated embodiment, the first treatment course is the 'standard washing' course. A view in which a swipe gesture ① of touching a portion of the course display area 316 as a starting point and moving the finger in a first direction is input is illustrated.

An image illustrated in (b) is the course selection page P310 in which a second treatment course (illustrated example: artificial intelligence washing) is specified as the specific treatment course. (b) illustrates an image in which the specific treatment course is switched to the second treatment course as the swipe gesture ① illustrated in (a) is input. In the illustrated example, the second treatment course is the 'artificial intelligence washing' course.

Each treatment course constituting the plurality of treatment courses has a set sequence. [Table 1] is a table that exemplifies and describes the treatment courses and a unique order corresponding to each treatment course. In an embodiment, the sequence of the treatment courses may follow the order of [Table 1]. When the swipe gesture is input, the treatment course may be specified as the specific treatment course based on the set sequence.

**[Table 1]**

| Order | Treatment course | Treatment course name | Description |
|---|---|---|---|
| 1 | First treatment course | First course name | Description of first treatment course |
| 2 | Second treatment course | Second course name | Description of second treatment course |
| 3 | Third treatment course | Third course name | Description of third treatment course |
| 4 | Fourth treatment course | Fourth course name | Description of fourth treatment course |
| 5 | Fifth treatment course | Fifth course name | Description of fifth treatment course |
| 6 | Sixth treatment course | Sixth course name | Description of sixth treatment course |
| 7 | Seventh treatment course | Seventh course name | Description of seventh treatment course |
| ... | ......... | ... | ... |
| n | Nth treatment course | Nth course name | Description of nth treatment course |

For example, when the first apparatus manipulation UI 300 is the washing machine, the treatment course is the washing course. The name of the first treatment course, a first course name, may be the 'standard washing', and a description of the first treatment course may be 'clean general laundry'. For example, when the second apparatus manipulation UI 400 is the dryer, the treatment course is the drying course. The name of the first treatment course, a first course name, may be the 'standard drying', and a description of the first treatment course may be 'soften general laundry'.

In an embodiment, when the swipe gesture is input in the first direction from right to left, a next treatment course in order is specified as the specific treatment course. However, when the specific treatment course is the last in order, a first treatment course in order is specified as the specific treatment course again.

In an embodiment, when the swipe gesture is input in a second direction from left to right, a previous treatment course in order is specified as the specific treatment course. However, when the specific treatment course is first in order, the last treatment course in order is specified as the specific treatment course again.

When the specific treatment course is changed to another treatment course, the indicator display portion 330 may display a sequence indicator 332. The sequence indicator 332 is a component that indicates the sequence of the specific treatment course such that the user may visually recognize the same. There may be various expression methods of the sequence indicator 332, but in the illustrated embodiment, the expression is made by filling and emptying inside of a plurality of circular shapes arranged in a horizontal line. In the illustrated embodiment, the filled circular shape constituting the sequence indicator 332 indicates the sequence of the specific treatment course.

In an embodiment, when a swipe gesture ② is input in the second direction while the second treatment course (illustrated example: artificial intelligence washing) is specified as the specific treatment course as referenced in (b), the specific treatment course is changed to the first treatment course (illustrated example: standard washing). The first treatment course is ahead of the second treatment course in order.

In an embodiment, as referenced in (b), when a swipe gesture ③ is input in the first direction while the second treatment course (illustrated example: artificial intelligence washing) is specified as the specific treatment course, the specific treatment course is changed to a third treatment course (illustrated example: blanket). The third treatment course is behind the second treatment course in order.

In an embodiment, as referenced in (c), when a swipe gesture ④ is input in the second direction while the third treatment course (illustrated example: blanket) is specified as the specific treatment course, the specific treatment course is changed to the second treatment course (illustrated example: artificial intelligence washing). The second treatment course is ahead of the third treatment course in order.

In an embodiment, as referenced in (c), when a swipe gesture ⑤ is input in the first direction while the third treatment course (illustrated example: blanket) is specified as the specific treatment course, the specific treatment course is changed to a fourth treatment course (illustrated example: small amount rapid). The fourth treatment course is behind the third treatment course in order.

In an embodiment, as referenced in (d), when a swipe gesture ⑥ is input in the second direction while the fourth treatment course (illustrated example: small amount rapid) is specified as the specific treatment course, the specific treatment course is changed to the third treatment course (illustrated example: blanket). The fourth treatment course is ahead of the third treatment course in order.

Each treatment course may be specified as the specific treatment course by the method described with reference to FIG. 14.

The sequence indicator 332 may be displayed for a set time and then disappear. In an embodiment, the sequence indicator 332 may be displayed for the set time immediately after the specific treatment course is changed and then disappear. The sequence indicator 332 may be displayed for the set time and then the indicator 331 may be displayed again. In an embodiment, the set time for displaying the sequence indicator 332 may be 3 seconds.

In the case of the second apparatus manipulation UI 400 for manipulating the second treating apparatus 20, each treatment course may be specified as the specific treatment course by the method described in FIG. 14.

In FIG. 15, (a) illustrates embodiments of the indicators 331 that may be applied in the first apparatus manipulation UI 300 according to an embodiment of the present disclosure, and (b) illustrates an embodiment of the sequence indicator 332 that may be applied in the first apparatus manipulation UI 300 according to an embodiment of the present disclosure. A description will be made with reference to FIG. 15.

In an embodiment, the indicator 331 and the sequence indicator 332 may be displayed in the indicator display portion 330 referred to in FIGS. 9, 10, and 11.

In describing the indicator 331, (a) illustrates an embodiment of the indicator 331 provided in the first apparatus manipulation UI 300. The indicator 331 may be expressed as a pictogram (or an icon). [Table 2] lists information that may be displayed via the indicator 331 in the first apparatus manipulation UI 300 according to an embodiment. The priority may be higher in a following order: 'screen occupying apparatus' -> 'Wi-Fi' -> 'remote control' -> 'door lock' -> 'drying preparation' -> 'turbo shot' -> 'steam' -> 'reservation' -> 'wrinkle prevention' -> 'lock'.

**[Table 2]**

| Information displayed via indicator | Description of state in which indicator is displayed | Reference numeral |
|---|---|---|
| Screen occupying apparatus | Information on apparatus with interface activated (visual indication of whether activated interface is first apparatus manipulation UI 300 or second apparatus manipulation UI 400) | 331a |
| Wi-Fi | Wi-Fi connection state - connected: display based on connection strength | 331b |
| | - disconnection display | |
| | - Icon not displayed in unregistered or unconnected state | |
| Remote control | During remote control operation | 331c |
| Door lock | When door is locked after cycle starts | 331d |
| Drying preparation | When drying preparation is set | 331e |
| Turbo shot | When turbo shot is set | 331f |
| Steam | When steam is set | 331g |
| Reservation | When reservation is set | 331h |
| Wrinkle prevention | When wrinkle prevention is set | 331i |
| Lock | When lock function is set | 331j |

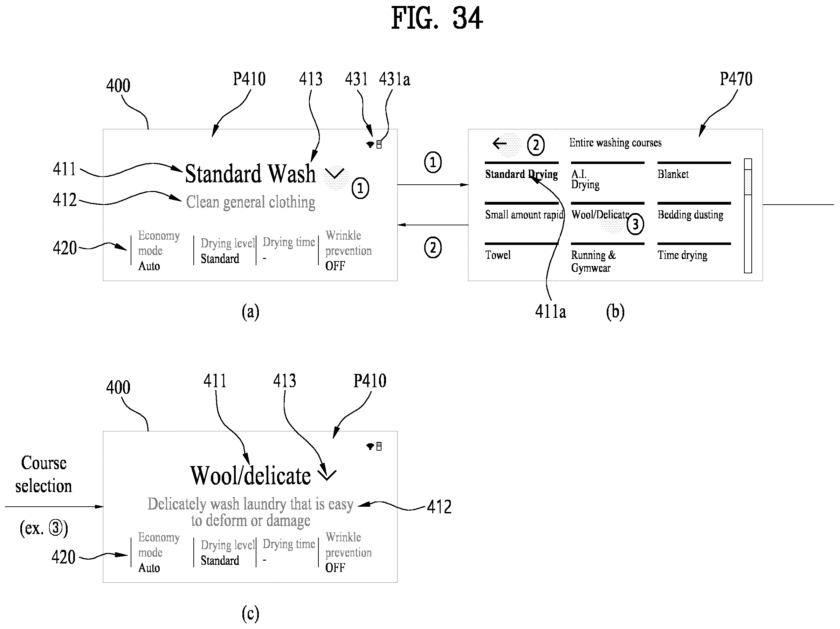

An indicator 431 provided in the second apparatus manipulation UI 400 will be described as an embodiment. The indicator 431 provided in the second apparatus manipulation UI 400 may be appropriately referenced in FIG. 34. [Table 3] lists information that may be displayed via the indicator 431 in the second apparatus manipulation UI 400 according to an embodiment. The priority may be higher in an order of 'screen occupying apparatus' -> 'Wi-Fi' -> 'remote control' -> 'door lock' -> 'steam' -> 'turbo shot' -> 'ironing notification' -> 'reservation'.

**[Table 3]**

| Information displayed via indicator | Description of state in which indicator is displayed | Reference numeral |
|---|---|---|
| Screen occupying apparatus | Information on apparatus with interface activated (visual indication of whether activated interface is first apparatus manipulation UI 300 or second apparatus manipulation UI 400) | 431a |
| Wi-Fi | Wi-Fi connection state - connected: display based on connection strength | 431b |
| | - disconnection display | |
| | - Icon not displayed in unregistered or unconnected state | |
| Remote control | During remote control operation | 431c |
| Door lock | When door is locked after cycle starts | 431d |
| Steam | When steam is set | 431e |
| Ironing notification | When ironing notification is set | 431f |
| Reservation | When reservation is set | 431g |
| Lock | When lock function is set | 431h |

In one example, when each indicator 331 and 431 is generated and displayed, a motion effect may be applied to focus user's attention. The motion effect means causing an effect such that a movement occurs on the screen. For example, the motion effect may cause a newly displayed indicator to blink. In an embodiment, the indicator 331a indicating the 'screen occupying apparatus' provides the user with intuitive visual information on which treating apparatus is currently an object-to-be-manipulated. In an embodiment, the apparatus indicator 331a indicating the 'screen occupying apparatus' may have a shape with two squares stacked vertically. This symbolizes a shape in which the first treating apparatus 10 and the second treating apparatus 20 are stacked. In the first apparatus manipulation UI 300, it may be provided in a shape in which a lower square is colored. The lower square may be colored with the first color. Although not shown in FIG. 15, in the second apparatus manipulation UI 400, it may be provided in a shape in which an upper square is colored. The upper square may be colored with a second color. The first color and the second color are different colors. A difference in the color allows the user to quickly visually recognize an object-to-be-controlled. In describing the sequence indicator 332, (b) illustrates an embodiment of the sequence indicator 332 provided in the first apparatus manipulation UI 300. The sequence indicator 332 is a component that allows the user to visually recognize the sequence of the specific treatment course. There may be various expression methods of the sequence indicator 332, but in the illustrated embodiment, the expression is made by filling and emptying inside of the plurality of circular shapes arranged in the horizontal line. In the illustrated embodiment, the filled circular shape constituting the sequence indicator 332 indicates the sequence of the specific treatment course.

The number of circular shapes constituting the sequence indicator 332 may correspond to the number of treatment courses provided, but it may be sufficient with the number of circular shapes appropriate for a screen configuration as long as the visual effect that allows the user to recognize the sequence is provided.

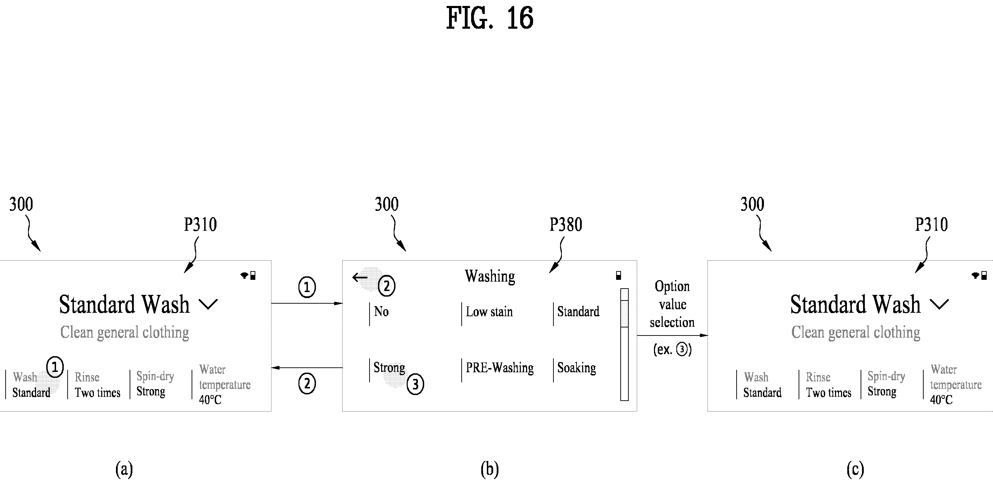

FIG. 16 illustrates a flow of changing a setting value, in which the course selection page P310 of the first apparatus manipulation UI 300 according to an embodiment of the present disclosure is displayed on the touch screen 240. A description will be made with reference to FIG. 16.

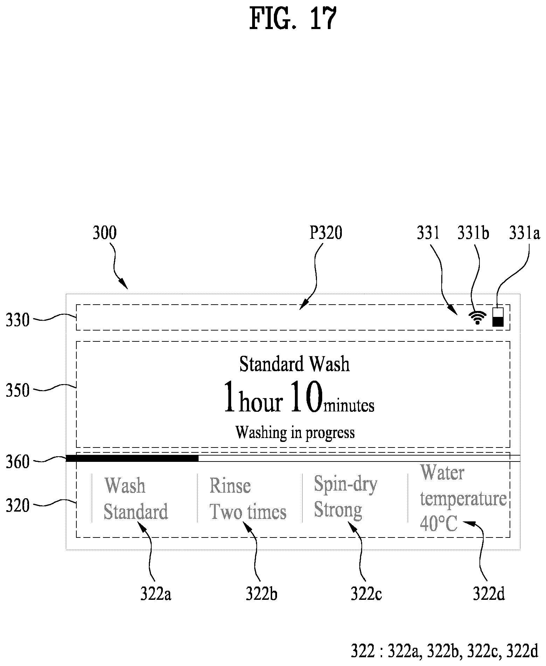

Refer to (a). In an embodiment, the course selection page P310 provides the option display portion 320. The option display portion 320 may display the provided options provided by the specific treatment course. The provided options may be one or more options provided by the specific treatment course among the various options provided by the first treating apparatus 10. In an image illustrated in (a), the provided options are the washing option, the number of times the rinsing is performed, the dehydration intensity, and the water temperature. Setting values of provided options, which allows the user to change the setting values, among the provided options are displayed in the first appearance. The first appearance may be compared with the setting value 322 displayed in the second appearance illustrated in FIG. 17. The first appearance and the second appearance are visually different from each other. In an embodiment, the first appearance and the second appearance may have a difference in a text attribute of displaying the setting value. In an embodiment, the first appearance and the second appearance have different brightnesses. In an embodiment, the second appearance may have a lower brightness than the first appearance. In an embodiment not illustrated, the first appearance and the second appearance may have a difference in at least one of a font, a text boldness, a text style, and a text size.
(a) illustrates a view in which the user touches an area occupied by the setting value to change the option. In an embodiment, the option to be changed is the washing option. The user touches ① an area where the setting value of the washing option is displayed. An area occupied by each setting value corresponding to each of one or more options provided as suggested options may be provided as a setting value inputter. In the illustrated embodiment, the setting value of the washing option is the 'standard'.
(b) illustrates a view in which an option change tool P380 is output on the touch screen 240. In an embodiment, the option change tool P380 outputs a list of changeable setting values. The user may select a desired setting value on the option change tool P380 and change the same. In an embodiment, the selection of the desired setting value may be made by an input of touching an area occupied by the desired setting value. In the illustrated embodiment, the selected setting value may be the 'strong', and the setting value may be changed by touching ③ an area occupied by the 'strong' . In one example, the back button may be touched ② to return to the course selection page P310 without changing the setting value.
(c) illustrates an image in which the change of the setting value is applied. The washing option has been changed from the 'standard' to the 'strong'.

When the user does not change the setting value of the provided option, the setting value of the provided option is output as the default value set in advance for each treatment course. The default value may be updated based on the usage frequency in which the user changes the setting value.

FIG. 17 illustrates a state in which the first apparatus manipulation UI 300 according to an embodiment of the present disclosure is displayed on the touch screen 240, and a first page P320 according to an embodiment is output. A description will be made with reference to FIG. 17.

The first page P320 is output when the cycle is in progress. In an embodiment, the first page P320 includes a present condition display portion 350, the progress indicating bar 360, the option display portion 320, and the indicator display portion 330.

In an embodiment, the present condition display portion 350 displays the course name 311, a remaining time until the treatment is completed 341, and a present condition name 351 of displaying a current state such as a cycle name currently in progress.

The progress indicating bar 360 is a means for visually indicating a degree of progress of the laundry treatment performed by the first treating apparatus 10. In an embodiment, the progress indicating bar 360 may be a horizontal bar that crosses the touch screen 240 from left to right. The progress indicating bar 360 indicates the degree of progress of the laundry treatment using a length of filling inside the bar shape. The progress indicating bar 360 increases an internal filling amount of the bar shape as the treatment progresses. In an embodiment, a filling color of the progress indicating bar 360 displayed in the first apparatus manipulation UI 300 may be a different color from a filling color of the progress indicating bar displayed in the second apparatus manipulation UI 400. In an embodiment, the filling color of the progress indicating bar 360 displayed in the first apparatus manipulation UI 300 may be the first color. The filling color of the progress indicating bar displayed in the second apparatus manipulation UI 400 may be the second color. The first color is a color the same as or at least recognized by the user to be the same as the first color, which is the filling color of the indicator 331a indicating the 'screen occupying apparatus'.

In an embodiment, the setting value is not able to be changed during the cycle. The state in which the setting value is not able to be changed is represented by the second appearance. The view illustrated in FIG. 17 is an example of the second appearance, indicating the state in which the user is not able to change the setting value.

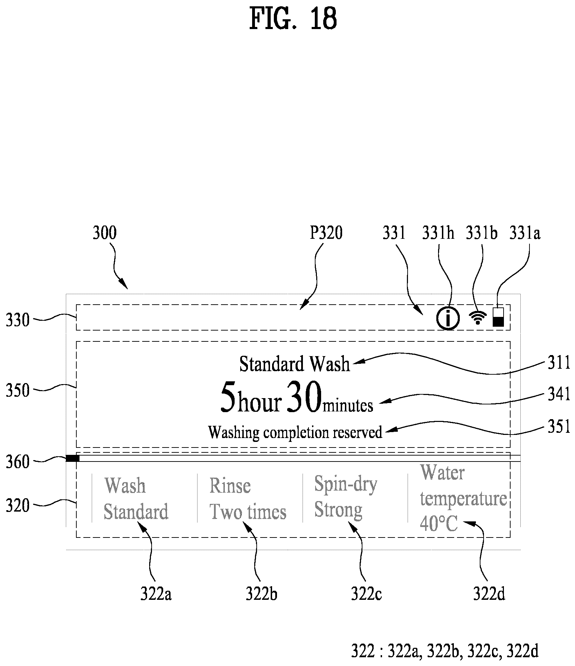

FIG. 18 illustrates a state in which the first apparatus manipulation UI 300 according to an embodiment of the present disclosure is displayed on the touch screen 240, the first page P320 according to an embodiment is output, and the reservation option is set. A description will be made with reference to FIG. 18.

The first page P320 is output when the cycle is in progress. In an embodiment, the ongoing cycle is a reservation cycle. The reservation cycle is a cycle of waiting such that the specific treatment course is not executed until a set time, but the specific treatment course is executed when the set time is reached such that the specific treatment course is completed at a set future time. The reservation cycle may be executed by executing the treatment course while the reservation option is set. The remaining time 341 indicates a remaining time until the course input to be executed is completed. In the illustrated embodiment, the present condition name 351 may be displayed as 'washing completion reserved'. The indicator display portion 330 may additionally display a reservation indicator 331h.

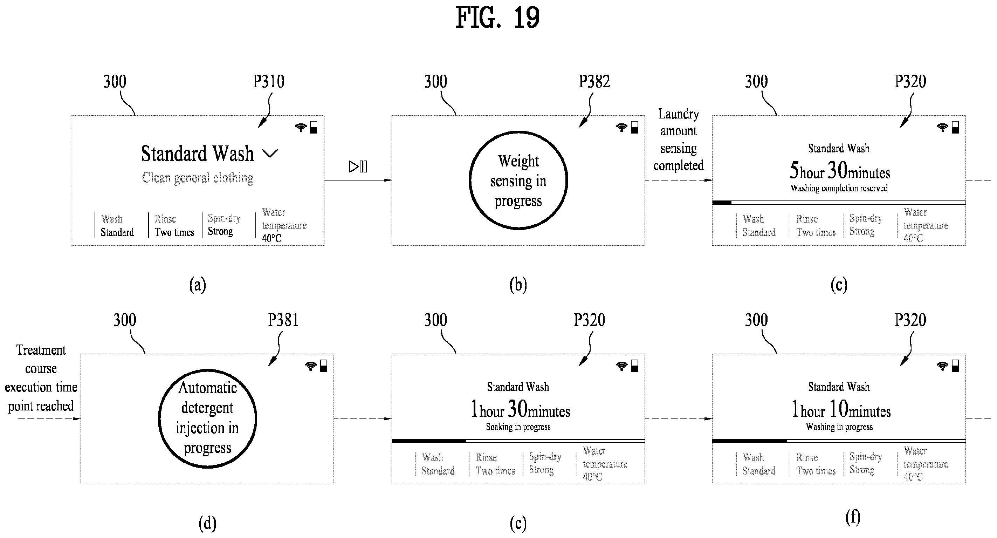

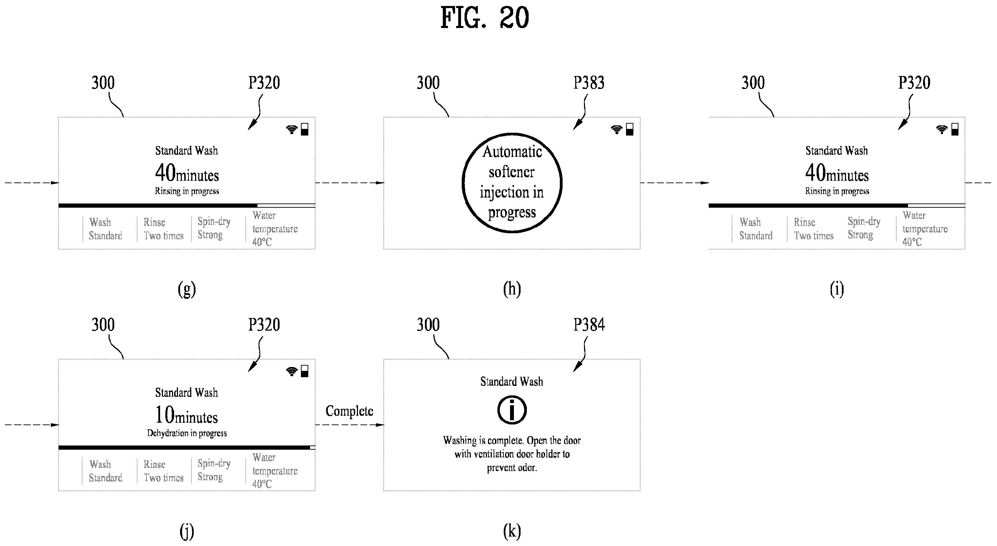

FIGS. 19 and 20 illustrate a flow of execution, progression, and completion of the standard washing as the specific treatment course, in which the first apparatus manipulation UI 300 according to an embodiment of the present disclosure is displayed on the touch screen 240 and the reservation option is set according to an embodiment.
(a) is an image of the course selection page P310 being output. In an embodiment, the reservation option is set. In an embodiment, the 'standard washing' is specified as the specific treatment course.

In an embodiment, an execution command to execute the specific treatment course is input. The user touches the first execution/pause button 271 to input the execution command. The first treating apparatus 10 that has received the execution command senses the amount of laundry. When the amount of laundry is sensed, a first guidance page P381 is output on the touch screen 240. (b) is an image of the first guidance page P381 being output. The first guidance page P381 displays a guidance phrase indicating that the amount of laundry is being sensed. In an embodiment, the guidance phrase may be 'weight sensing in progress'.

When the amount of laundry sensing is completed, a treatment course execution time point at which the specific treatment course starts may be calculated based on the sensed amount of laundry and the completion time set in the reservation option. The reservation cycle is performed until the treatment course execution time point is reached. (c) is an image of the first page P320 being displayed in the reservation cycle.

When the treatment course execution time point is reached, the treatment course is executed. When the automatic detergent/softener option is set, the detergent of an amount determined based on the sensed amount of laundry is injected. While the detergent is being injected automatically, a second guidance page P382 may be output on the touch screen 240. (d) is an image of the second guidance page P382 being output. The second guidance page P382 displays a guidance phrase indicating that the detergent is being injected. In an embodiment, the guidance phrase may be 'detergent being injected automatically'. In an embodiment, when the treatment course is executed, the reservation indicator is no longer displayed.

(e), (f), (g), (i), and (j) represent the first pages P320 when respective cycles that constitute the specific treatment course are performed, respectively. In an embodiment, the specific treatment course may include a soaking cycle, a washing cycle, a rinsing cycle, and a dehydration cycle. In an embodiment, the soaking cycle is displayed as 'soaking in progress' in the portion where the present condition name is displayed. In an embodiment, the washing cycle is displayed as 'washing in progress' in the portion where the present condition name is displayed. In an embodiment, the rinsing cycle is indicated as 'rinsing in progress' in the portion where the present condition name is displayed. In an embodiment, the dehydration cycle is displayed as 'dehydration in progress' in the portion where the present condition name is displayed.

When the automatic detergent/softener option is set, the softener of an amount determined based on the sensed amount of laundry is injected. In an embodiment, the softener is injected before final rinsing. While the softener is being automatically injected, the touch screen 240 may output a third guidance page P383. (h) is an image of the third guidance page P383 being output. The third guidance page P383 displays a guidance phrase indicating that the softener is being injected. In an embodiment, the guidance phrase may be 'softener being injected automatically'.

In an embodiment, when the specific treatment course is completed, the user may be informed that the course is completed. (k) is an image of a fourth guidance page P384 that includes guidance indicating the completion of the course being output. The fourth guidance page P384 displays a guidance phrase indicating that the specific treatment course is completed. The guidance phrase may include a follow-up action after the completion of the treatment course. In an embodiment, the fourth guidance page P384 displays the course name (illustrated example: standard washing) of the completed specific treatment course. In an embodiment, the guidance phrase may be 'Washing is completed. Open the door with a ventilation door holder to prevent odor'.

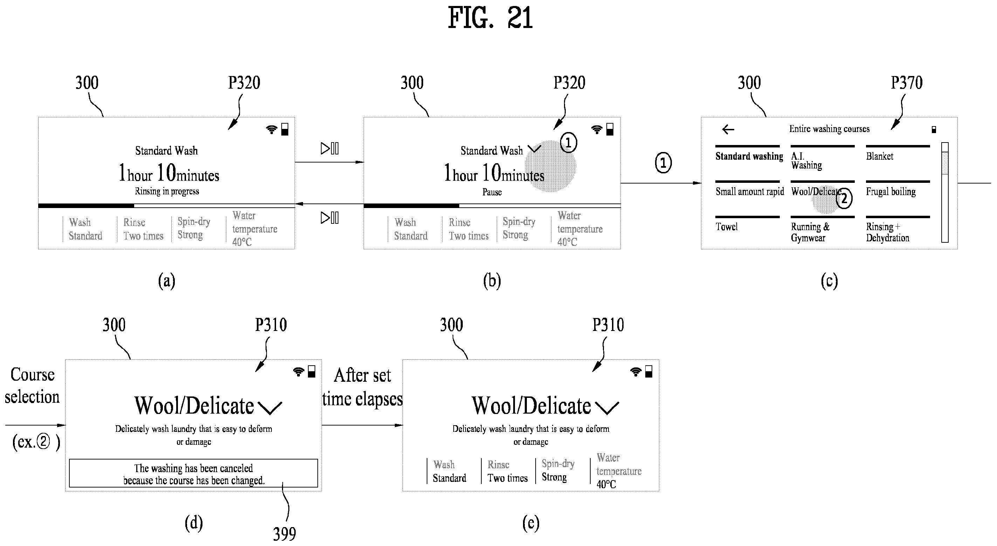

FIG. 21 illustrates a flow when the specific treatment course is changed to another treatment course based on a first method, in which the first apparatus manipulation UI 300 according to an embodiment of the present disclosure is displayed on the touch screen 240 and any of the treatment courses is paused during progression as the specific treatment course according to an embodiment. The method of changing the specific treatment course based on the first method described in FIG. 21 is a change via the course selection page P310. A description will be made with reference to FIG. 21.
(a) illustrates the first page P320 when a cycle constituting the specific treatment course is in progress. In an embodiment, the cycle in progress is the rinsing cycle. The rinsing cycle is displayed as 'rinsing in progress' in the portion where the present condition name is displayed.

A pause command may be input while the cycle is in progress. The pause command may be input by the user. In an embodiment, the user may input the pause command via the first execution/pause button 271. When the pause command is input, the progress of the specific treatment course is paused. (b) illustrates the first page P320 in the paused state. 'Pause' is displayed in the portion where the present condition name is displayed. When the specific treatment course is paused, the specific treatment course may be changed to another treatment course. The first page P320 in the paused state displays the course browser 313. (b) illustrates a view in which the user touches ① the course browser 313.

(c) illustrates a view in which the course selection page P310 is output. The specific treatment course may be changed to another treatment course on the course selection page P310. (c) illustrates a view of touching ② and selecting another treatment course. In the illustrated example, another treatment course is the 'wool/delicate' course.

When the specific treatment course is changed while the specific treatment course is paused during the progression, the specific treatment course that has been in progress is canceled. In an embodiment, when the specific treatment course is changed to the second treatment course while the first treatment course is paused during progression, the first treatment course is no longer processed and is canceled. (d) illustrates a view in which the course selection page P310 is output as the specific treatment course is changed and the specific treatment course that has been in progress is canceled. The course selection page P310 displays a newly specified specific treatment course. In the illustrated embodiment, the newly specified specific treatment course is the 'wool/delicate' course. In an embodiment, a cancellation guide pop-up 399 including a cancellation guide notifying that the specific treatment course that has been in progress has been canceled is output on the course selection page P310. In an embodiment, a phrase for the cancellation guide may be 'The washing has been canceled because the course has been changed.'. The cancellation guide pop-up 399 may be displayed for a set time.

(e) represents a state in which the cancellation guide pop-up 399 has disappeared after the set time has elapsed since the image of (d) was displayed. In an embodiment, the set time may be 3 seconds.

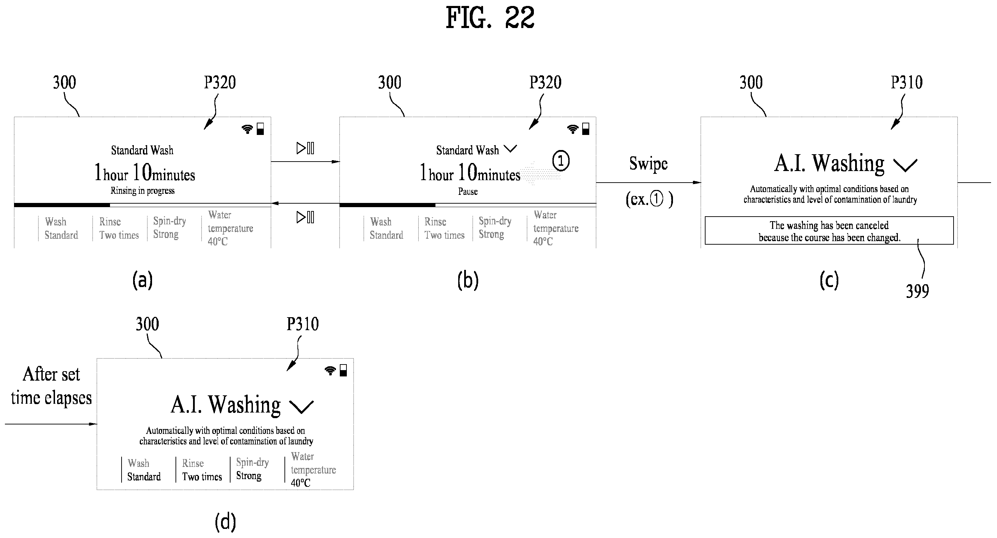

FIG. 22 illustrates a flow when the specific treatment course is changed to another treatment course based on a second method, in which the first apparatus manipulation UI 300 according to an embodiment of the present disclosure is displayed on the touch screen 240 and any of the treatment courses is paused during progression as the specific treatment course according to an embodiment. The method of changing the specific treatment course based on the second method described in FIG. 22 is a change via the swipe gesture. A description will be made with reference to FIG. 22.
(a) illustrates the first page P320 when a cycle constituting the specific treatment course is in progress. In an embodiment, the cycle in progress is the rinsing cycle. The rinsing cycle is displayed as 'rinsing in progress' in the portion where the present condition name is displayed.

The pause command may be input while the cycle is in progress. The pause command may be input by the user. In an embodiment, the user may input the pause command via the first execution/pause button 271. When the pause command is input, the progress of the specific treatment course is paused. (b) illustrates the first page P320 in the paused state. The 'pause' is displayed in the portion where the present condition name is displayed. When the specific treatment course is paused, the specific treatment course may be changed to another treatment course. In an embodiment, when the swipe gesture is input in the first direction or the second direction on the first page P320 in the paused state, the specific treatment course is changed. (b) illustrates a view in which a swipe gesture ① is input in the first direction.

When the specific treatment course is changed while the specific treatment course is paused during the progression, the specific treatment course that has been in progress is canceled. In an embodiment, when the specific treatment course is changed to the second treatment course while the first treatment course is paused during the progression, the first treatment course is no longer in progress and is canceled. (d) illustrates a view in which the specific treatment course that has been in progress is canceled as the specific treatment course is changed, and the course selection page P310 is output. The newly specified specific treatment course is displayed on the course selection page P310. In the illustrated embodiment, the newly specified specific treatment course is the `artificial intelligence washing' course. In an embodiment, the cancellation guide pop-up 399 including the cancellation guide notifying that the specific treatment course that has been in progress has been canceled is output on the course selection page P310. In an embodiment, the phrase for the cancellation guide may be 'The washing has been canceled because the course has been changed.'. The cancellation guide pop-up 399 may be displayed for the set time.

(d) represents a state in which the cancellation guide pop-up 399 has disappeared after the set time has elapsed since the image of (c) was displayed. In an embodiment, the set time may be 3 seconds.

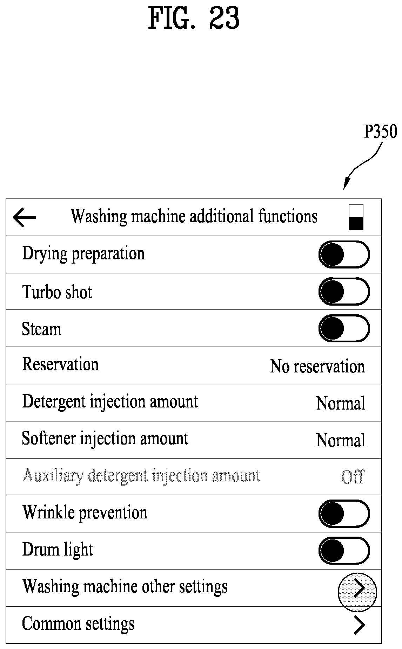

FIG. 23 is an additional function page P350 of the first treating apparatus 10 according to an embodiment of the present disclosure. FIG. 23 illustrates a touch input to enter an 'other settings' item among additional function items. A description will be made with reference to FIG. 23.

The additional function page P350 is an embodiment of a function setting page. The function setting page may display various functions that may be set, and may be a page that may receive an input from the user. In the present document, the function that may be set on the additional function page P350 according to an embodiment is called an additional function.

The additional function page P350 may be output by a user's command. In an embodiment, the user may access the additional function page P350 via the input of touching the additional function button 260 referred to in FIG. 5. When the input of the user via the additional function button 260 is received, the touch screen 240 may output the additional function page P350. The additional functions are a variety of options that may be provided when the laundry treating apparatus performs the treatment course.

In an embodiment, there may be a plurality of additional functions that may be set on the additional function page P350. Respective items of the plurality of additional functions may be provided as a list. The plurality of additional functions provided on the additional function page P350 may be too many to be entirely output on a single screen of the touch screen 240. The additional function page P350 may scan all of the items via a user's scrolling motion. For convenience of description, an entirety of the additional function page P350 according to an embodiment is illustrated. The additional function page P350 may display an apparatus indicator indicating the 'screen occupying apparatus'.

In an embodiment, the first treating apparatus 10 is the washing machine. In an embodiment, the washing machine may be provided with the plurality of additional functions. The respective items of the plurality of additional functions may be provided as the list. The additional functions may include a drying preparation function, a turbo shot function, a steam function, a reservation function, a detergent injection amount setting function, a softener injection amount setting function, an auxiliary detergent injection amount setting function, a wrinkle prevention function, a drum light function, and the like, but may not be limited to those listed.

In an embodiment, additional functions with low usage frequency may be collected in washing machine other settings. FIG. 23 illustrates a touch input to enter an 'additional function' item.

In an embodiment, additional functions that may be commonly set by the first treating apparatus 10 and the second treating apparatus 20 may be collected in a 'common settings' item. In an embodiment, items that are not able to be set may be displayed darker (DIM processing) than other items to visually inform the user that they are not able to be set.

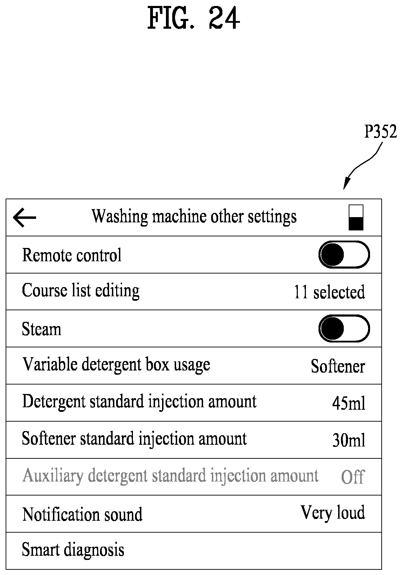

FIG. 24 illustrates a state in which an other settings page P352, which collects the additional functions with the low usage frequency among the additional functions of the first treating apparatus 10 according to an embodiment of the present disclosure, is output. A description will be made with reference to FIG. 24.

The additional functions provided on the other settings page P352 may include remote control, course list editing, steam setting, variable detergent box usage, detergent standard injection amount, softener standard injection amount, auxiliary detergent standard injection amount, notification sound volume, and smart diagnosis, but may not be limited to those listed.

In an embodiment, in the 'course list editing' function, the plurality of treatment courses may be edited. The other settings page P352 may display the number of treatment courses selected among the plurality of treatment courses. For example, when the number of selected treatment courses is 11, it is displayed as '11 selected'.

In an embodiment, the first treating apparatus 10 or the second treating apparatus 20 may be provided with first to 28th treatment courses as the treatment courses. Some of the treatment courses may only be used or frequently used by the user. The 'course list editing' function may be used to perform editing such that unused or infrequently used treatment courses are not provided as choices. For example, only the first treatment course, the second treatment course, and the fifth to tenth treatment courses may be selected to be used, and the rest may be deselected and set not to be used. In an embodiment, whenever any of the treatment courses in the treatment course list is checked (selected) or unchecked (deselected), a setting value is reflected in real-time background. Among the treatment courses provided on the course selection page P310 and the course browse page P370, only the treatment courses that are checked (selected) among the items in the treatment course list are displayed.

In an embodiment, the user may edit the unique order of the treatment course in the course list editing function. When the course list editing is completed, the treatment courses provided to the user in the course selection page P310 and the course browse page P370 are the selected treatment courses.

In an embodiment, a plurality of treatment courses are listed on a course list editing screen. The list is sorted in order from the checked (selected) treatment courses to the unchecked (deselected) treatment courses. In other words, the checked (selected) treatment courses are exposed first, and the unchecked (deselected) treatment courses are exposed last. This may be understood by referring to sorting of [Table 4] and [Table 5]. [Table 4] is sorting of items output when the user primarily enters the course list editing screen and primarily edits the course list. [Table 5] is sorting of items output when the user secondarily enters the course list editing screen after the primary editing.

**[Table 4]**

| Selection state (mark 'v' when selected) | Item |
|---|---|
| v | First treatment course |
| v | Second treatment course |
| v | Third treatment course |

| | **Fourth treatment course** |
|---|---|
| v | Fifth treatment course |
| v | Sixth treatment course |
| v | Seventh treatment course |
| v | Eighth treatment course |
| | Ninth treatment course |
| | Tenth treatment course |
| **v** | **11th treatment course** |
| | 12th treatment course |
| | 13th treatment course |
| **v** | **14th treatment course** |
| | ... |
| | Nth treatment course |

**[Table 5]**

| Selection state (mark 'v' when selected) | Item |
|---|---|
| v | First treatment course |
| v | Second treatment course |
| v | Third treatment course |
| v | Fifth treatment course |
| v | Sixth treatment course |
| v | Seventh treatment |
| | course |
| v | Eighth treatment course |
| **v** | **11th treatment course** |
| **v** | **14th treatment course** |

| | **Fourth treatment course** |
|---|---|
| | Ninth treatment course |
| | Tenth treatment course |
| | 12th treatment course |
| | 13th treatment course |
| | ... |
| | Nth treatment course |

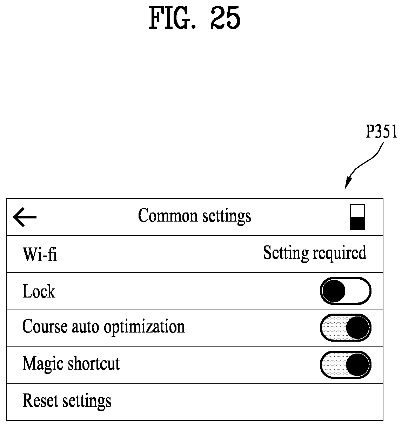

In an embodiment, the course list may be automatically edited based on a user's usage pattern and recommended to the user. In an embodiment, the laundry treating apparatus may recommend to the user to remove a treatment course that is determined to be not frequently used from the course list. FIG. 25 illustrates a state in which a common settings page P351, which is a page that collects the additional functions that may be commonly set by the first treating apparatus 10 and the second treating apparatus 20 according to an embodiment of the present disclosure, is output. When the 'common settings' item referenced in FIG. 23 is entered, the common settings page P351 illustrated in FIG. 25 may be output. A description will be made with reference to FIG. 25. The additional functions provided in the common setting page P351 may include Wi-Fi setting, lock, automatic course optimization, magic shortcut, and initialization of settings, but may not be limited to those listed. The 'common settings' item, which is the additional function provided in the common settings page P351, has a setting value that is synchronized with that of the second treating apparatus 20. In an embodiment, the 'common settings' item has the setting values that are synchronized between the first treating apparatus 10 and the second treating apparatus 20.

In an embodiment, the 'detergent injection amount' may be set in stages via an adjustment scheme using a slider on a detergent injection amount setting page. In an embodiment, for the detergent injection amount, one of off, much less, less, normal, more, and much more may be selected based on the standard injection amount. In an embodiment, the 'standard injection amount' may be a value set in the other settings in mL parts. In an embodiment, the detergent injection amount setting page may display the apparatus indicator 331a. The apparatus indicator 331a may be displayed in various pages that constitute the additional settings to visually distinguish whether the currently displayed additional function page is for the first apparatus manipulation UI 300 or the second apparatus manipulation UI 400.

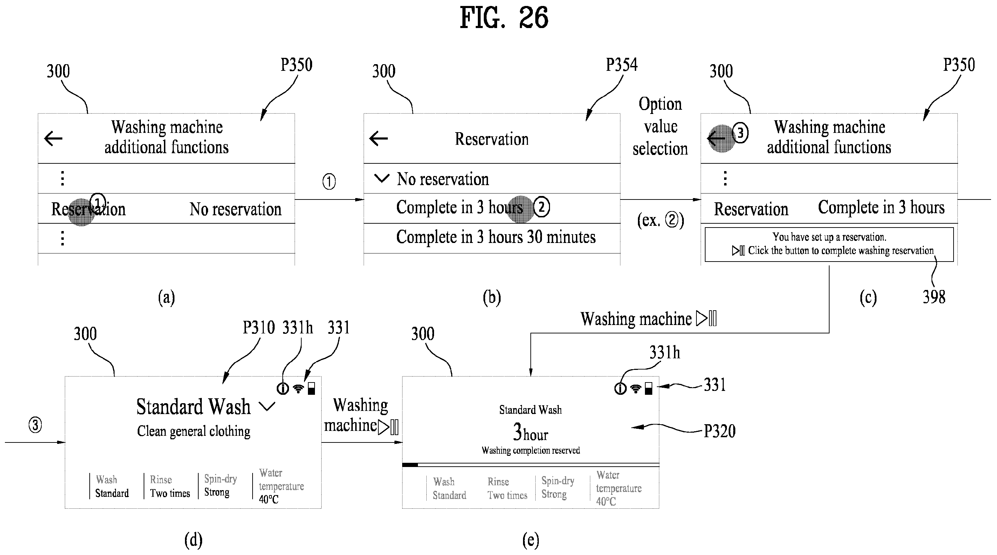

FIG. 26 illustrates a flow of setting a reservation option among additional functions according to an embodiment of the present disclosure and a flow of executing a reservation cycle as the reservation option is set. A description will be made with reference to FIG. 26.
(a) illustrates a view in which the additional function page P350 is output on the touch screen 240. The reservation setting function may be provided as the additional function in the additional function page P350. (a) illustrates a view of touching ① a reservation for the reservation setting.
(b) illustrates a view in which a reservation page P354 is output on the touch screen 240. The reservation page P354 provides a choice for selecting a time available for the reservation. In an embodiment, a desired treatment completion time may be input to complete the setting. In an embodiment, a view of completing the reservation option setting by touching ② 'complete in 3 hours' is illustrated.
(c) is an image according to an embodiment that is output on the touch screen 240 immediately after the reservation is completed. When the reservation setting is completed, it is notified that the reservation is completed. In an embodiment, a completion pop-up 398 notifying that the reservation setting is completed may be output. In an embodiment, when a desired completion time is touched in the image (b), the additional function page P350 may be immediately returned. In an embodiment, (c) illustrates a state of returning to the additional function page P350, and the completion of the reservation setting may be notified to the user via the completion pop-up 398. A message output in the completion pop-up 398 may be 'The reservation has been set. Press the _ button to complete the washing reservation.'.
(d) illustrates an image output on the touch screen 240 based on a flow of touching ③ the back button in (c). In (d), the first page P320 is output. In an embodiment, the indicator 331 displayed in the first page P320 is added with the reservation indicator 331h.
(e) shows the first page P320 in which the reservation cycle is in progress. While the first page P320 is output as in (d), when the execution command of executing the specific treatment course is input, the reservation cycle based on the set reservation option is executed. In an embodiment, the execution command may be input via an input of the user of touching the first execution/pause button 271. When the reservation setting is completed even in the additional function page P350 as in (c), the reservation cycle based on the set reservation option is executed when the execution command is input. In an embodiment, the execution command may be input via an input of the user of touching the first execution/pause button 271.

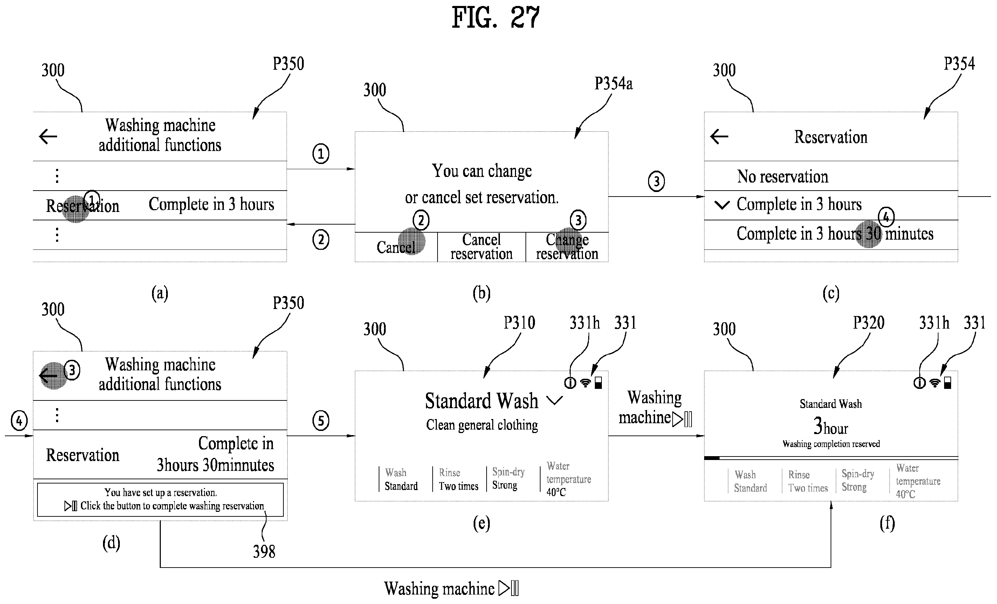

FIG. 27 illustrates a flow of changing a preset reservation option among additional functions according to an embodiment of the present disclosure and a flow of executing a reservation cycle.
(a) illustrates a view in which the additional function page P350 is output on the touch screen 240. The reservation setting function may be provided as the additional function in the additional function page P350. (a) illustrates a view of touching ① a reservation to change a reservation that has already been set.
(b) illustrates a view in which a reservation change page P354a is output on the touch screen 240. When accessing the reservation page P354 to change the reservation that has already been set, the reservation change page P354a is output. In the reservation change page P354a, a command to return without changing the reservation, a command to cancel the reservation, and a confirmation command to change the reservation may be input. When a button displayed as 'cancel' is selected, the command to return without changing the reservation is input. When a button displayed as 'cancel reservation' is pressed, the command to cancel the reservation is input. When a button displayed as 'change reservation' is pressed, the confirmation command to change the reservation is input. Refer to the embodiment illustrated. As referenced in (b), when the 'cancel' button is touched ②, the reservation is not changed and the screen returns to the additional function page P350. When the 'change reservation' button is touched ③, the reservation page P354 is accessed.
(c) illustrates a view in which the reservation page P354 is output on the touch screen 240. The reservation page P354 provides choices for selecting a time available for reservation. In an embodiment, the desired treatment completion time may be input to complete the setting. In an embodiment, a view of completing the reservation option setting by touching ④ 'complete in 3 hours and 30 minutes' is illustrated.
(d) is an image according to an embodiment output on the touch screen 240 immediately after the reservation is completed. When the reservation setting is completed, it is notified that the reservation is completed. In an embodiment, the completion pop-up 398 notifying that the reservation setting is completed may be output. In an embodiment, when the desired completion time is touched in the image (c), the additional function page P350 may be immediately returned. In an embodiment, (d) illustrates a state in which the additional function page P350 is returned, and the completion of the reservation setting may be notified to the user via the completion pop-up 398. A message output in the completion pop-up 398 may be 'The reservation has been set. Press the _ button to complete the washing reservation.'.
(e) illustrates an image output on the touch screen 240 based on a flow of touching ⑤ the back button in (d). The first page P320 is output in (e). In an embodiment, the indicator 331 displayed in the first page P320 includes the reservation indicator 33 1h.
(f) illustrates the first page P320 in which the reservation cycle is in progress. While the first page P320 is output as in (d), when the execution command of executing the specific treatment course is input, the reservation cycle based on the set reservation option is executed. In an embodiment, the execution command may be input via a user's input of touching the first execution/pause button 271. When the reservation setting is completed even in the additional function page P350 as in (d), the reservation cycle based on the set reservation option is executed when the execution command is input. In an embodiment, the execution command may be input via a user's input of touching the first execution/pause button 271.

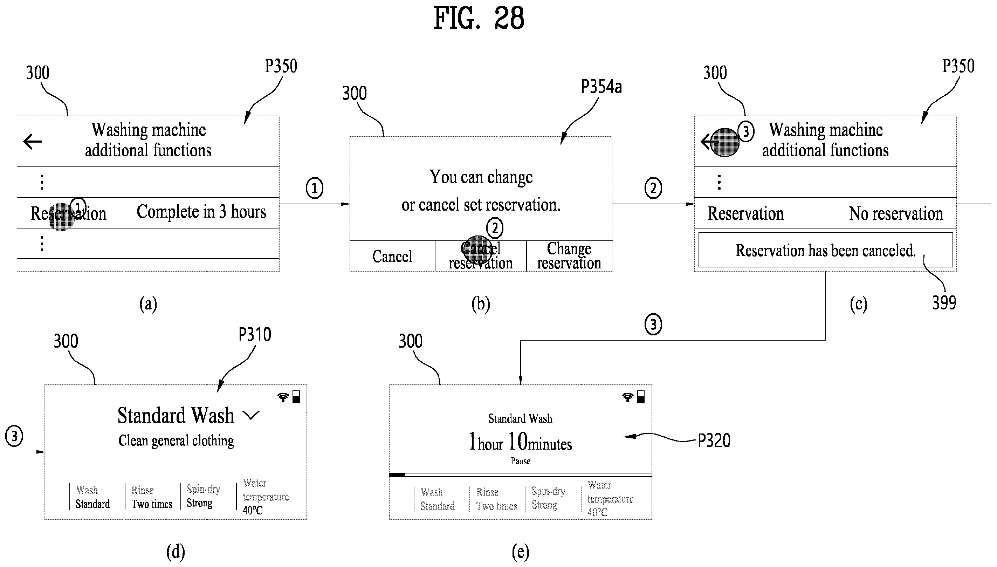

FIG. 28 illustrates a flow of canceling a preset reservation option among additional functions according to an embodiment of the present disclosure and a flow of images displayed on the first apparatus manipulation UI 300.
(a) illustrates a view in which the additional function page P350 is output on the touch screen 240. The reservation setting function may be provided as the additional function in the additional function page P350. (a) illustrates a view of touching ① a reservation to change a reservation that has already been set.
(b) illustrates a view in which the reservation change page P354a is output on the touch screen 240. When accessing the reservation page P354 to change the reservation that has already been set, the reservation change page P354a is output. In the reservation change page P354a, the command to return without changing the reservation, the command to cancel the reservation, and the confirmation command to change the reservation may be input. When the button displayed as the 'cancel' is selected, the command to return without changing the reservation is input. When the button displayed as the 'cancel reservation' is pressed, the command to cancel the reservation is input. When the button displayed as the 'change reservation' is pressed, the confirmation command to change the reservation is input. Refer to the embodiment illustrated. As referenced in (b), when the 'cancel reservation' button is touched ②, the reservation is canceled. In an embodiment, when the reservation is canceled, the additional function page P350 is not able to be returned.
(c) is an image according to an embodiment that is output on the touch screen 240 immediately after the reservation is canceled. When the reservation setting is completed, it is notified that the reservation has been canceled. In an embodiment, a cancellation completion pop-up 399 notifying that the reservation has been canceled may be output. In an embodiment, the completion of the reservation setting may be notified to the user via the cancellation completion pop-up 399. A message output in the cancellation completion pop-up 399 may be 'The reservation has been canceled.'.
(d) and (e) illustrate images output on the touch screen 240 based on a flow of touching ③ the back button in (c). In an embodiment, (d) is a case in which a page before accessing the additional function page P350 is the course selection page P310. In an embodiment, (e) is a case in which the page before accessing the additional function page P350 is the first page P320.

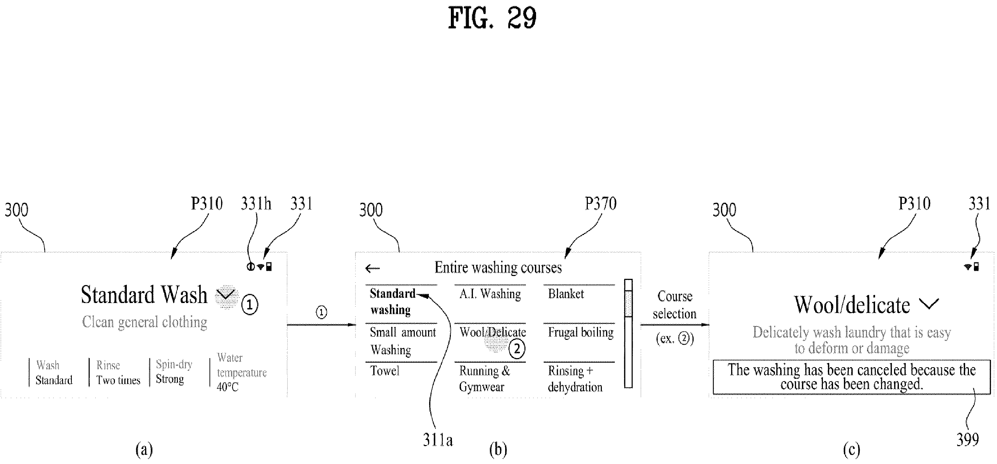

FIG. 29 illustrates a flow when a specific treatment course is changed based on the first method in the course selection page P310 in which the reservation option is set among the additional functions according to an embodiment of the present disclosure.
(a) illustrates the course selection page P310 in which the reservation setting is completed. The course selection page P310 displays an apparatus indicator 331h. (a) illustrates a view of touching ① and selecting the course browser 313 in the course selection page P310. The course browse page P370 may be accessed via the course browser 313.

The image illustrated in (b) is a view in which the course browse page P370 is output. The currently specified specific treatment course may be changed to another treatment course in the course browse page P370. In an embodiment, a current specific treatment course 311a is the 'standard washing' course. The user may change the specific treatment course by selecting another treatment course. In an embodiment, the specific treatment course may be changed by touching ② the 'wool/delicate' course.

(c) illustrates the course selection page P310 in which the specific treatment course is changed and output again. The course selection page P310 displays the newly specified specific treatment course. When the specific treatment course is changed, the reservation that has already been set is canceled. In the illustrated embodiment, the specific treatment course is changed from the 'standard washing' to the 'wool/delicate' course. The newly specified specific treatment course is the 'wool/delicate' course. In an embodiment, the course selection page P310 outputs the cancellation guide pop-up 399 including the cancellation guide notifying that the reservation that has already been set has been canceled. In an embodiment, a phrase for the cancellation guide may be 'The reservation has been canceled because the course has been changed.'. The cancellation guide pop-up 399 may be displayed for a set time.

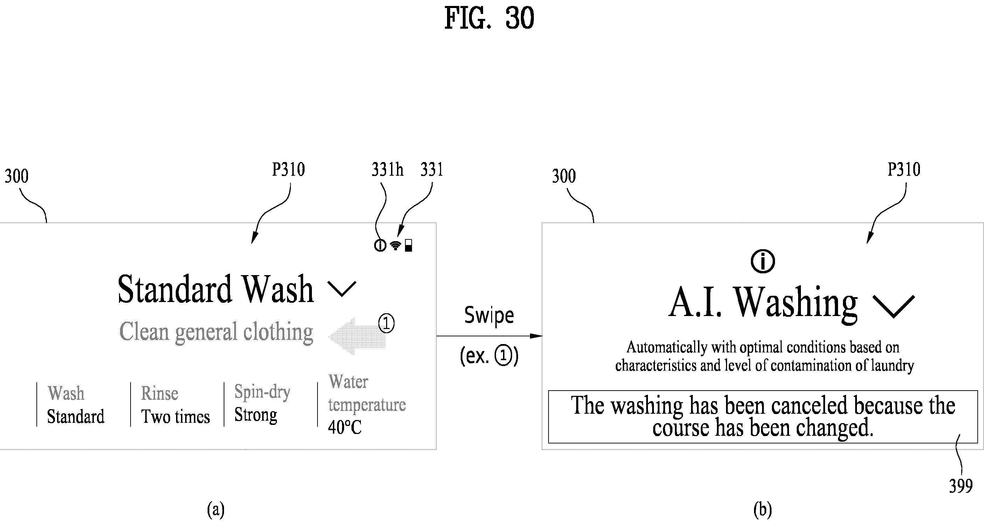

FIG. 30 illustrates a flow when a specific treatment course is changed based on the second method in the course selection page P310 in which the reservation option is set among the additional functions according to an embodiment of the present disclosure.
(a) illustrates the course selection page P310 in which the reservation setting is completed. The course selection page P310 displays the apparatus indicator 331h. (a) illustrates a view of inputting a swipe gesture ① in the course selection page P310. Depending on a swipe direction of the swipe gesture, another treatment course is specified as the specific treatment course.
(b) illustrates the course selection page P310 in which the specific treatment course has been changed. The newly specified specific treatment course is displayed in the course selection page P310. When the specific treatment course is changed, the reservation that has already been set is canceled. In the illustrated embodiment, the specific treatment course has been changed from the 'standard washing' to the `artificial intelligence washing' course. The newly specified specific treatment course is the `artificial intelligence washing' course. In an embodiment, the cancellation guide pop-up 399 including the cancellation guide notifying that the reservation that has already been set has been canceled is output in the course selection page P310. In an embodiment, the phrase for the cancellation guide may be 'The reservation has been canceled because the course has been changed.'. The cancellation guide pop-up 399 may be displayed for the set time.

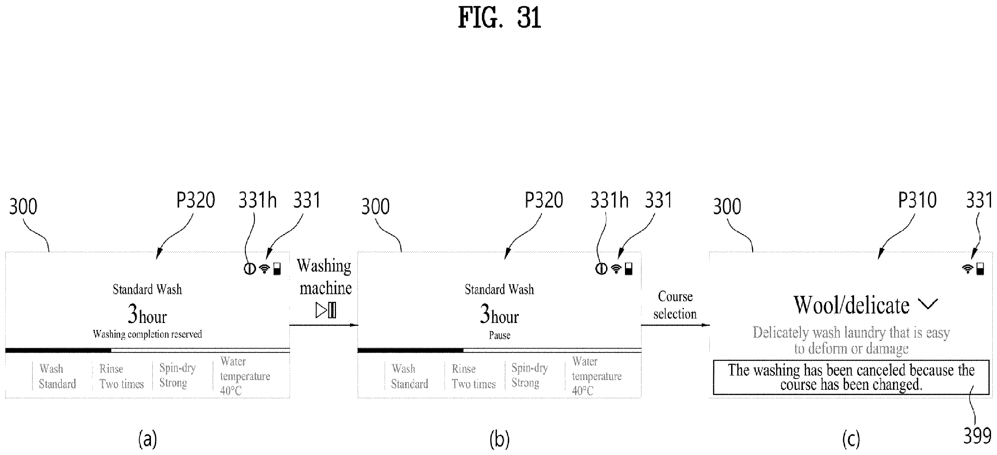

FIG. 31 illustrates a flow when a specific treatment course is changed in the first page P320 while the reservation cycle is in progress as the reservation option is set among the additional functions according to an embodiment of the present disclosure.
(a) illustrates the first page P320 in the state in which the reservation setting is completed and the reservation cycle is executed. The first page P320 displays the apparatus indicator 331h. The first page P320 with the reservation cycle in progress may be set such that the option or the treatment course is not able to be changed. The pause command may be input while the reservation cycle is in progress. The pause command may be input by the user. In an embodiment, the user may input the pause command via the first execution/pause button 271. When the pause command is input, the progress of the reservation cycle is paused.
(b) illustrates the first page P320 in the paused state. The 'pause' is displayed in the portion where the present condition name is displayed. When the specific treatment course is paused, the specific treatment course may be changed to another treatment course. The first page P320 in the paused state may display the course browser, and the change of the specific treatment course using the swipe gesture is also available.
(c) is the course selection page P310 in which the specific treatment course has been changed. The course selection page P310 displays the newly specified specific treatment course. When the specific treatment course is changed, the reservation that has already been set is canceled. In the illustrated embodiment, the specific treatment course has been changed from the 'standard washing' to the 'wool/delicate' course. The newly specified specific treatment course is the 'wool/delicate' course. In an embodiment, the course selection page P310 outputs the cancellation guide pop-up 399 including the cancellation guide notifying that the reservation that has already been set has been canceled. In an embodiment, the phrase for the cancellation guide may be 'The reservation has been canceled because the course has been changed.'. The cancellation guide pop-up 399 may be displayed for the set time.

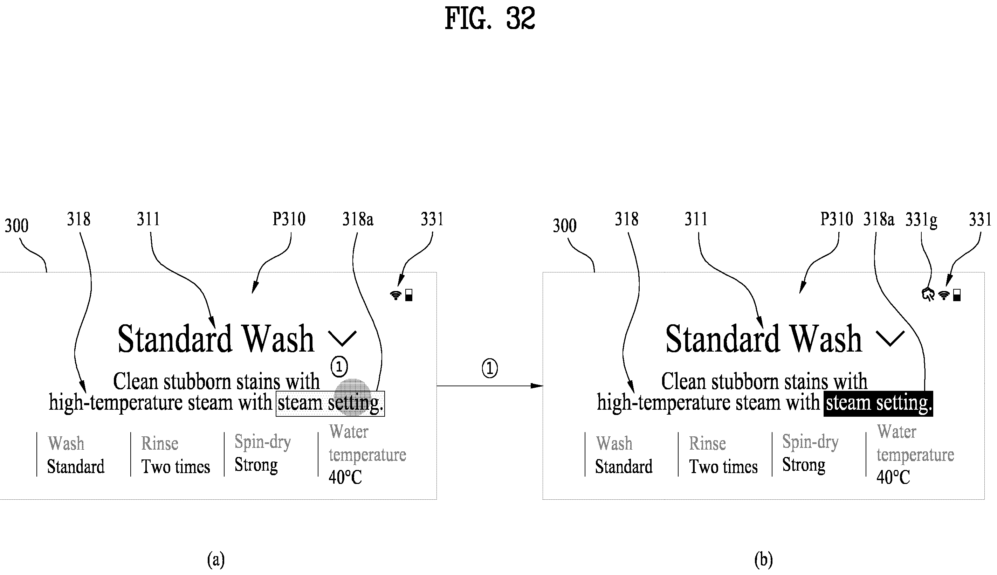

FIG. 32 illustrates a view in which an 'option suggestion' is suggested and a flow in which the 'option suggestion' is accepted and reflected when 'magic shortcut', which is one of the additional functions that may be set by the additional functions according to an embodiment of the present disclosure, is set, in which the first apparatus manipulation UI 300 according to an embodiment of the present disclosure is displayed on the touch screen 240.
(a) illustrates a view in which the course selection page P310 is output when the 'magic shortcut' function is set. The 'magic shortcut' function is a function that displays an option suggestion 318a that suggests a setting value of an option that may be changed in the selected treatment course or an additional option that may be added to the user. The option suggestion 318a may be displayed in a suggestion phrase 318 that describes the suggested option. The suggestion phrase 318 may be displayed instead of the course description 312 in the portion where the course description 312 is displayed. The option suggestion 318a may be displayed within a border that constitutes a portion of the suggestion phrase 318 and may be distinguished from the rest of the suggestion phrase 318. (a) illustrates a view in which the user touches ① the option suggestion 318a as an input of accepting the option suggestion 318a. Touching the option suggestion 318a means touching an area where the option suggestion 318a is displayed. Touching the area where the option suggestion 318a is displayed means that a limited area of the area where the option suggestion 318a is displayed is defined as a touch input area and the input area is touched.
(b) illustrates a state in which the option suggestion 318a is accepted by the user's input. When the option suggestion 318a is accepted by the user's input, the first apparatus manipulation UI 300 displays the option suggestion 318a to have a first color. The first color is related to the color of the apparatus indicator 331a and the color of the progress indicating bar 360 in the first apparatus manipulation UI 300 described above. In an embodiment, interior of the border surrounding the option suggestion 318a is filled with the first color. Whether the option suggestion 318a is accepted may be recognized via such color difference.

When the option suggestion 318a is accepted, whether the accepted option is reflected may be displayed via the indicator 331. In an embodiment, because the 'steam' function is set, the steam indicator 331g indicating that the 'steam' is set may be displayed on the indicator 331.

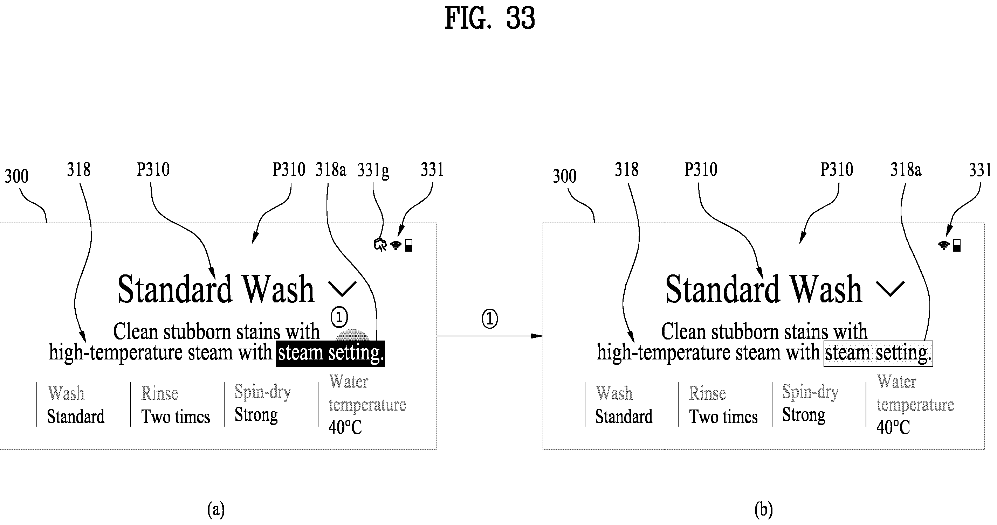

FIG. 33 illustrates a flow in which, contrary to FIG. 32, the acceptance of the 'option suggestion' is released and the 'option suggestion' is not applied.
(a) illustrates a state in which the option suggestion 318a is accepted and a view of touching ① an area where the option suggestion 318a is provided. (b) illustrates a view in which the accepted option setting is released and the option suggestion 318a is not applied.

FIG. 34 illustrates a flow of changing the specific treatment course via the course browse page, in which the second apparatus manipulation UI 400 according to an embodiment of the present disclosure is displayed on the touch screen 240.

An image illustrated in (a) is a course selection page P410. The course selection page P410 is output on the touch screen 240. A course browser 413 is selected in the course selection page P410. The course browser 413 may be selected by a user's touch ① on an area where the course browser 413 is provided.

An image illustrated in (b) is a course browse page P470. The course browse page P470 is output on the touch screen 240. The course browse page P470 outputs a plurality of course names corresponding to the plurality of treatment courses as a list.

In an embodiment, among the plurality of course names output as the list, a course name of a specific treatment course is displayed to be distinguished from other course names. In an embodiment, the course name of the specific treatment course and other course names are displayed in different colors to be distinguished from each other. In an embodiment, the 'standard drying', which is the illustrated specific treatment course, may be provided as letters 411a having a second color. The second color is a color that is the same as or recognized as the same as a color of an indicator 431a indicating a 'screen occupying apparatus' in the second apparatus manipulation UI 400 and a color of a progress indicating bar in the second apparatus manipulation UI 400. Other course names may be provided as letters having a third color that is distinguished from the second color.

Because the touch screen 240 has a limited screen size, the plurality of course names may not be entirely displayed in one image. In an embodiment, the course browse page P470 may display some of the plurality of course names output as the list, and the rest may be displayed by user's scrolling. When a user input via the course browser 413 is received while a first treatment course is displayed as the specific treatment course in the course selection page P410, the course browse page P470 is displayed, and a portion where a course name of the first treatment course is displayed is displayed first in the course browse page P470. In an illustrated embodiment, the first treatment course is the 'standard drying'.

In the course browse page P470, a treatment course desired by the user may be selected as the specific treatment course. When one of the plurality of course names is selected, a treatment course of the selected course name is specified as the specific treatment course. In an embodiment, a 'wool/delicate' course may be selected by a user's touch ③. When the course is selected, the course selection page P410 with the selected treatment course as the specific treatment course is output. When a back button 314 is touched ② in the course browse page P470, the course selection page P410 with the existing specific treatment course maintained is output.

An image illustrated in (c) is the course browse page P470 where the specific treatment course is changed to the 'wool/delicate' course by selecting the 'wool/delicate' course in the course browse page P470.

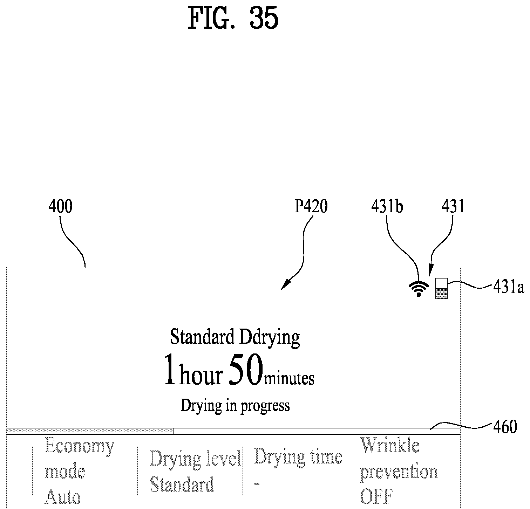

FIG. 35 illustrates a state in which the second apparatus manipulation UI 400 according to an embodiment of the present disclosure is displayed on the touch screen 240 and a first page P420 according to an embodiment of the present disclosure is output.

The first page P420 is output when the cycle is in progress. In an embodiment, the first page P420 includes the present condition display portion, the progress indicating bar 360, the option display portion, and the indicator display portion.

In an embodiment, the description of the present condition display portion is replaced with the description of FIG. 17.

The progress indicating bar 460 is a means for visually indicating a degree of progress of the laundry treatment performed by the second treating apparatus 20. In an embodiment, the progress indicating bar 460 may be a horizontal bar that crosses the touch screen 240 from left to right. The progress indicating bar 460 indicates the degree of progress of the laundry treatment using a length of filling inside the bar shape. The progress indicating bar 460 increases an internal filling amount of the bar shape as the treatment progresses. In an embodiment, a filling color of the progress indicating bar 460 displayed in the second apparatus manipulation UI 400 may be a different color from a filling color of the progress indicating bar displayed in the first apparatus manipulation UI 300. In an embodiment, the filling color of the progress indicating bar 460 displayed in the second apparatus manipulation UI 400 may be the second color. The filling color of the progress indicating bar displayed in the first apparatus manipulation UI 300 may be the first color. The second color is a color the same as or at least recognized by the user to be the same as the second color, which is the filling color of the indicator 431a indicating the 'screen occupying apparatus'.

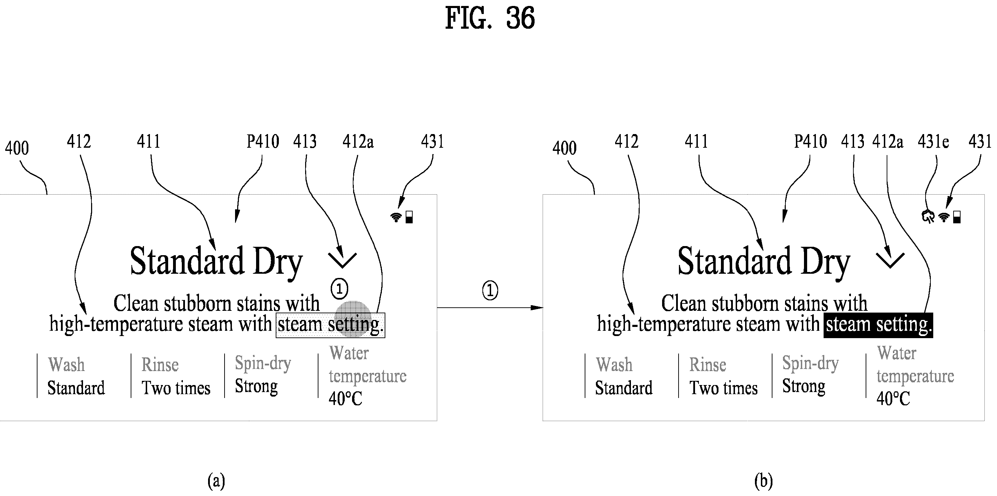

FIG. 36 illustrates a view in which the 'option suggestion' is suggested and a flow in which the 'option suggestion' is accepted and reflected when the 'magic shortcut', which is one of the additional functions that may be set by the additional functions according to an embodiment of the present disclosure, is set, in which the second apparatus manipulation UI 400 according to an embodiment of the present disclosure is displayed on the touch screen 240.
(a) illustrates a view in which the course selection page P410 is output when the 'magic shortcut' function is set. The 'magic shortcut' function is a function that displays the option suggestion 318a that suggests the setting value of the option that may be changed in the selected treatment course or the additional option that may be added to the user. The option suggestion 418a may be displayed in a suggestion phrase 418 that describes the suggested option. The option suggestion 418a may be displayed within a border that constitutes a portion of the suggestion phrase 418 and may be distinguished from the rest of the suggestion phrase 418. (a) illustrates a view in which the user touches ① the option suggestion 418a as an input of accepting the option suggestion 418a. Touching the option suggestion 418a means touching an area where the option suggestion 418a is displayed. Touching the area where the option suggestion 418a is displayed means that a limited area of the area where the option suggestion 418a is displayed is defined as a touch input area and the input area is touched.
(b) illustrates a state in which the option suggestion 418a is accepted by the user's input. When the option suggestion 418a is accepted by the user's input, the second apparatus manipulation UI 400 displays the option suggestion 418a to have a second color. The second color is related to the color of the apparatus indicator 431a and the color of the progress indicating bar 460 in the second apparatus manipulation UI 400 described above. In an embodiment, interior of the border surrounding the option suggestion 418a is filled with the second color. Whether the option suggestion 418a is accepted may be recognized via such color difference.

When the option suggestion 418a is accepted, whether the accepted option is reflected may be displayed via the indicator 431. In an embodiment, because the 'steam' function is set, a steam indicator 431e indicating that the 'steam' is set may be displayed on the indicator 431.

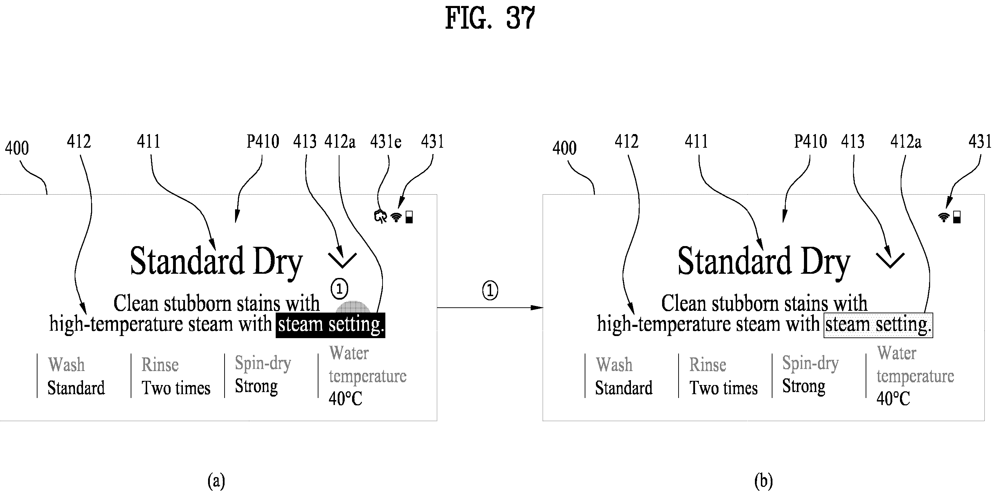

FIG. 37 illustrates a flow in which, contrary to FIG. 36, the acceptance of the 'option suggestion' is released and the 'option suggestion' is not applied.
(a) illustrates a state in which the option suggestion 418a is accepted and a view of touching ① an area where the option suggestion 418a is provided. (b) illustrates a view in which the accepted option setting is released and the option suggestion 418a is not applied.

Although the present disclosure has been illustrated and described with respect to the specific embodiments, it will be apparent to those skilled in the art that the present disclosure may be variously improved and modified without departing from the technical spirit of the present disclosure as provided by the following claims.

## Claims

1. A laundry treating apparatus provided with a plurality of treatment courses for treating laundry, the laundry treating apparatus comprising:
a UI section with a user interface (UI) including a screen where an image is output and a first inputter configured to receive an input of a user,
wherein the screen is configured to output a first page or a second page,
wherein the first page includes a course display portion where a specific treatment course specified among the plurality of treatment courses is displayed,
wherein the second page displays a list including a plurality of course names respectively corresponding to the plurality of treatment courses,
wherein the image of the screen is switched from the first page to the second page by the input of the user via the first inputter.

2. The laundry treating apparatus of claim 1, wherein when one of the plurality of course names is selected in the second page, the screen is configured to output the first page where a treatment course corresponding to the selected one is specified as the specific treatment course.

3. The laundry treating apparatus of claim 1, wherein the screen is equipped as a touch screen configured to receive a touch input of the user,
wherein when an area corresponding to one of the plurality of course names is selected from the list of the second page, the screen is configured to output the first page where a treatment course corresponding to the selected one is specified as the specific treatment course.

4. The laundry treating apparatus of claim 1, wherein among the plurality of course names in the second page, a course name of the specific treatment course is displayed to be distinguished from remaining course names.

5. The laundry treating apparatus of claim 4, wherein the course name of the specific treatment course and the remaining course names are displayed in different colors.

6. The laundry treating apparatus of claim 1, wherein the second page displays a portion of the list and a remaining portion is displayed via scrolling of the user,
wherein in the second page output by switching from the first page, a course name of the specific treatment course is included in the portion of the list before the scrolling.

7. The laundry treating apparatus of claim 1, wherein the screen is equipped as a touch screen configured to receive a touch input of the user,
wherein the first inputter is displayed in the first page.

8. The laundry treating apparatus of claim 7, wherein the first inputter is provided in an area occupied by the course display portion.

9. The laundry treating apparatus of claim 8, wherein the first inputter is provided overlapping an area where the specific treatment course is displayed.

10. A laundry treating apparatus provided with a plurality of treatment courses for treating laundry, the laundry treating apparatus comprising:
a UI section with a user interface (UI) including a touch screen configured to output an image and receive a touch input of a user,
wherein the touch screen is configured to output a first page,
wherein the first page includes a course display portion where a specific treatment course specified among the plurality of treatment courses is displayed,
wherein when a portion of the touch screen where the first page is output is touched and a swipe gesture is input in a certain direction, one of the plurality of treatment courses is specified as the specific treatment course depending on the swipe direction.

11. The laundry treating apparatus of claim 10, wherein the portion of the touch screen for the swipe to be input is a portion of the course display portion.

12. The laundry treating apparatus of claim 10, wherein in a state where a first treatment course among the plurality of treatment courses is specified as the specific treatment course displayed in the course display portion,
a second treatment course different from the first treatment course is specified as the specific treatment course when the swipe direction is a first direction, and
a third treatment course different from the first treatment course and the second treatment course is specified as the specific treatment course when the swipe direction is a second direction different from the first direction.

13. The laundry treating apparatus of claim 10, wherein each treatment course constituting the plurality of treatment courses has a set sequence,
wherein when the swipe is input, the one of the plurality of treatment courses is specified as the specific treatment course depending on the set sequence and the swipe direction.

14. The laundry treating apparatus of claim 13, wherein a sequence indicator allowing visual recognition of the sequence of the displayed specific treatment course is displayed on the screen.

15. The laundry treating apparatus of claim 10, wherein the UI section includes a first inputter,
wherein the screen is configured to output the first page or a second page,
wherein a plurality of course names respectively corresponding to the plurality of treatment courses are displayed as a list in the second page,
wherein when the first inputter is selected during the output of the first page, the second page is output on the touch screen,
wherein when one of the plurality of course names is selected in the second page, a treatment course of the selected course name is specified as the specific treatment course.

16. The laundry treating apparatus of claim 1 or 10, wherein the course display portion displays a course name of the specific treatment course and a course description that is a description of the specific treatment course.

17. The laundry treating apparatus of claim 16, wherein a plurality of options are provided to at least one of the plurality of treatment courses,
wherein the first page further includes an option display portion where the plurality of options provided by the specific treatment course are displayed,
wherein the option display portion is positioned downward of the course display portion.

18. The laundry treating apparatus of claim 17, wherein respective option names and option values of the plurality of options are displayed in the option display portion.

19. The laundry treating apparatus of claim 1 or 10, further comprising:
a first treating apparatus including a first drum constructed to accommodate the laundry therein; and
a second treating apparatus disposed on the first treating apparatus and including a second drum constructed to accommodate the laundry therein.

20. The laundry treating apparatus of claim 19, wherein the first treating apparatus includes a first front panel disposed at a front side,
wherein the second treating apparatus includes a second front panel disposed at a front side,
wherein a control panel for controlling at least one of the first treating apparatus and the second treating apparatus is disposed between the first front panel and the second front panel,
wherein the UI section is provided on the control panel.
